(19) Europäisches Patentamt
European Patent Office
Office européen des brevets

(11) EP 4 502 674 A1

(12) EUROPEAN PATENT APPLICATION
published in accordance with Art. 153(4) EPC

(43) Date of publication:
**05.02.2025 Bulletin 2025/06**

(21) Application number: **23780786.2**

(22) Date of filing: **29.03.2023**

(51) International Patent Classification (IPC):
***G02B 5/26*** (2006.01) ***G02B 1/04*** (2006.01)
***G02B 5/28*** (2006.01) ***G02B 5/30*** (2006.01)
***G02C 7/10*** (2006.01)

(52) Cooperative Patent Classification (CPC):
**G02B 5/305; G02B 1/04; G02B 5/26; G02B 5/28; G02B 5/30; G02C 7/10**

(86) International application number:
**PCT/JP2023/013006**

(87) International publication number:
**WO 2023/190778 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022055736**

(71) Applicant: **Sumitomo Bakelite Co.Ltd.**
**Shinagawa-ku**
**Tokyo 140-0002 (JP)**

(72) Inventor: **ONODERA, Kazufusa**
**Tokyo 140-0002 (JP)**

(74) Representative: **Müller-Boré & Partner Patentanwälte PartG mbB**
**Friedenheimer Brücke 21**
**80639 München (DE)**

# (54) OPTICAL SHEET AND OPTICAL COMPONENT

(57) An optical sheet 15 of the present invention includes a first base material 11 which is made of a resin material having light transmittance as a main material, a half mirror layer 13 which is provided on one surface of the first base material 11 by bonding and consists of a laminate in which a high-refractive-index layer and a low-refractive-index layer are alternately laminated in a repeated manner, and a second base material 12 which is made of the resin material as a main material and is provided on a surface of the half mirror layer 13 opposite to the first base material 11 by bonding, in which, in the half mirror layer 13, a refractive index of the high-refractive-index layer is higher than a refractive index of the low-refractive-index layer, and a continuous layer is formed at an interface between the first base material 11 and the half mirror layer 13, and a continuous layer is formed at an interface between the second base material 12 and the half mirror layer 13.

FIG. 3

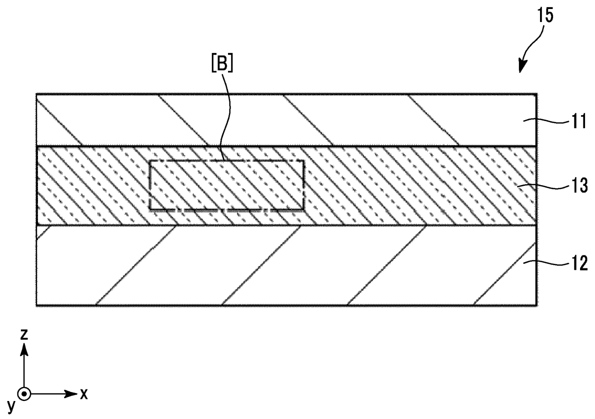




Processed by Luminess, 75001 PARIS (FR)

## Description

### Technical Field

The present invention relates to an optical sheet and an optical component.

### Background Art

In recent years, as a lens provided in eyewear such as eyeglasses and sunglasses, a lens having an optical sheet including a half mirror layer which selectively reflects light in a specific wavelength range and transmits light in other wavelength ranges on a surface thereof has been proposed for the purpose of improving designability.

In the lens having such an optical sheet on a surface thereof, for example, a flat optical sheet in a plan view is prepared, and the optical sheet is punched out into a predetermined shape such as a circular shape in a plan view, in a state in which protective films are attached to both surfaces the optical sheet. Thereafter, a bent optical sheet is obtained by subjecting the optical sheet to a thermal bending processing under heating to form a bent convex surface and a bent concave surface, which are formed into a bent shape by the thermal bending. Next, the protective films are peeled off from the bent optical sheet, and the bent optical sheet is sucked and held in a state in which a concave portion having a bent shape is in close contact with a mold concave portion of a mold. In this state, the lens having the optical sheet on the surface thereof is manufactured by forming a resin layer (molded layer) made of a resin material as a main material on the concave surface of the bent optical sheet by an insert injection molding method (see, for example, PTL 1).

In the method for manufacturing such a lens, as described above, the optical sheet is subjected to the thermal bending processing of thermally bending the optical sheet, so that a bent optical sheet in which one surface of the optical sheet is a bent concave surface and the other surface is a bent convex surface is obtained, and in the thermal bending processing, the optical sheet is required to have excellent processability.

Therefore, there is a demand for development of an optical sheet having excellent processability, for an optical sheet including a half mirror layer which selectively reflects light in a specific wavelength range and transmits light in other wavelength ranges.

### Citation List

### Patent Literature

[PTL 1] JP2009-294445A

### Summary of Invention

### Technical Problem

An object of the present invention is to provide an optical sheet which can exhibit excellent processability in an optical sheet including a half mirror layer which selectively reflects light in a specific wavelength range and transmits light in other wavelength ranges; and to provide an optical component having excellent reliability, the optical component including the optical sheet.

### Solution to Problem

Such objects can be achieved by the present invention described in the following items (1) to (11).

(1) An optical sheet including:

> a first base material which is made of a resin material having light transmittance as a main material;
> a half mirror layer which is provided on one surface of the first base material by bonding and consists of a laminate in which a high-refractive-index layer and a low-refractive-index layer are alternately laminated in a repeated manner; and
> a second base material which is made of the resin material as a main material and is provided on a surface of the half mirror layer opposite to the first base material by bonding,
> in which, in the half mirror layer, a refractive index of the high-refractive-index layer is higher than a refractive index of the low-refractive-index layer, and
> a continuous layer of the first base material and the half mirror layer is formed at an interface between the first base

material and the half mirror layer, and a continuous layer of the second base material and the half mirror layer is formed at an interface between the second base material and the half mirror layer.

(2) The optical sheet according to (1),
in which, in a case where a glass transition point of a main material constituting the high-refractive-index layer is denoted as Tg1 and a glass transition point of a main material constituting the low-refractive-index layer is denoted as Tg2, Tg1 and Tg2 are 105°C or higher.
(3) The optical sheet according to (2),
in which the glass transition point Tg1 and the glass transition point Tg2 satisfy a relationship of $0°C \leq |Tg1-Tg2| \leq 60°C$.
(4) The optical sheet according to (2) or (3),
in which a lower glass transition point between the glass transition point Tg1 and the glass transition point Tg2 is 110°C or higher and 250°C or lower.
(5) The optical sheet according to any one of (1) to (4),
in which, in a case where a refractive index of the high-refractive-index layer at a wavelength of 589 nm is denoted as N1 and a refractive index of the low-refractive-index layer at the wavelength of 589 nm is denoted as N2, a difference in refractive index (N1 - N2) is 0.05 or more and 0.25 or less.
(6) The optical sheet according to any one of (1) to (5),
in which an average thickness of each of the high-refractive-index layer and the low-refractive-index layer is 50 nm or more and 300 nm or less.
(7) The optical sheet according to any one of (1) to (6),
in which, in the half mirror layer, a number of repetitions of alternately laminating the high-refractive-index layer and the low-refractive-index layer is 50 or more and 750 or less.
(8) The optical sheet according to any one of (1) to (7),
in which a thickness direction retardation (Rth) of the half mirror layer at a wavelength of 589 nm is 500 nm or less.
(9) The optical sheet according to any one of (1) to (8),
in which, when the optical sheet is formed into a bent optical sheet having a bent shape with a curvature radius of 60 mm at a temperature higher than a higher glass transition point between a glass transition point Tg1 of a main material constituting the high-refractive-index layer and a glass transition point Tg2 of a main material constituting the low-refractive-index layer by 10°C, in a case where a reflectivity of the bent optical sheet with respect to light having a wavelength of 589 nm is denoted as R1 [%] and a reflectivity of the bent optical sheet which has been stored in a heat circulation oven in a temperature environment of 105°C for 1,000 hr with respect to the light having a wavelength of 589 nm is denoted as R2 [%], reflectivity retention obtained by $R2/R1 \times 100$ [%] is 80% or more.
(10) The optical sheet according to any one of (1) to (9),
in which, when the optical sheet is formed into a bent optical sheet having a bent shape with a curvature radius of 60 mm at a temperature higher than a higher glass transition point between a glass transition point Tg1 of a main material constituting the high-refractive-index layer and a glass transition point Tg2 of a main material constituting the low-refractive-index layer by 10°C, and then the bent optical sheet is stored in a heat circulation oven in a temperature environment of 105°C for 1,000 hr, among 50 bent optical sheets, a number of bent optical sheets in which peeling occurs between the first base material and the half mirror layer or between the second base material and the half mirror layer is 2 or less.
(11) An optical component including:
the optical sheet according to any one of (1) to (10).

## Advantageous Effects of Invention

According to the present invention, in the half mirror layer including a repeating portion which consists of the laminate including the high-refractive-index layer and the low-refractive-index layer alternately laminated, and the first base material and the second base material provided on the half mirror layer by bonding, a continuous layer of the first base material and the half mirror layer is formed at an interface between the first base material and the half mirror layer, and a continuous layer of the second base material and the half mirror layer is formed at an interface between the second base material and the half mirror layer. Therefore, even in a case where the optical sheet is subjected to a thermal bending processing to obtain a bent optical sheet in which one surface of the optical sheet is a bent concave surface and the other surface is a bent convex surface, it is possible to accurately suppress or prevent peeling between the first base material and the half mirror layer and peeling between the second base material and the half mirror layer at the interface between the first base material and the half mirror layer and the interface between the second base material and the half mirror layer. Therefore, it is possible to obtain an optical sheet having excellent processability.

Brief Description of Drawings

FIG. 1 is a perspective view showing an embodiment of sunglasses including the lens having a bent optical sheet in which the optical sheet according to the embodiment of the present invention is formed into a bent shape.

FIGS. 2A to 2D are schematic views for describing a manufacturing method of the lens having a bent optical sheet in which the optical sheet according to the embodiment of the present invention is formed into a bent shape.

FIG. 3 is a longitudinal sectional view showing a first embodiment of the optical sheet according to the present invention.

FIG. 4 is an enlarged cross-sectional view of a part of the half mirror layer included in the optical sheet, which is located in a region [B] surrounded by a one-dot chain line in FIG. 3.

FIG. 5 is a longitudinal sectional view showing a second embodiment of the optical sheet according to the present invention.

Description of Embodiments

Hereinafter, the optical sheet and the optical component according to the embodiments of the present invention will be described in detail with reference to suitable embodiments shown in the accompanying drawings.

The optical sheet according to the embodiment of the present invention includes a first base material which is made of a resin material having light transmittance as a main material, a half mirror layer which is provided on one surface of the first base material by bonding and includes a laminate in which a high-refractive-index layer and a low-refractive-index layer are alternately laminated in a repeated manner, and a second base material which is made of the resin material as a main material and is provided on a surface of the half mirror layer opposite to the first base material by bonding. In addition, in the half mirror layer, a refractive index of the high-refractive-index layer is higher than a refractive index of the low-refractive-index layer, a continuous layer of the first base material and the half mirror layer is formed at an interface between the first base material and the half mirror layer, and a continuous layer of the second base material and the half mirror layer is formed at an interface between the second base material and the half mirror layer.

As described above, in the present invention, with regard to the half mirror layer and the first base material and the second base material, the continuous layer of the first base material and the half mirror layer is formed at the interface between the first base material and the half mirror layer, and the continuous layer of the second base material and the half mirror layer is formed at the interface between the second base material and the half mirror layer. Therefore, even in a case where the optical sheet is subjected to a thermal bending processing to obtain a bent optical sheet in which one surface of the optical sheet is a bent concave surface and the other surface is a bent convex surface, it is possible to accurately suppress or prevent peeling between the first base material and the half mirror layer and peeling between the second base material and the half mirror layer at the interface between the first base material and the half mirror layer and the interface between the second base material and the half mirror layer. Therefore, it is possible to obtain an optical sheet having excellent processability.

A bent optical sheet having a bent shape including a bent convex surface and a bent concave surface, which is obtained by subjecting the optical sheet according to the embodiment of the present invention to a thermal bending processing under heating, is used, for example, as a resin substrate having a bent shape (bent resin substrate) which is provided in a lens of sunglasses which is a type of eyeglasses, in order to impart a half-mirror property to the lens. Hereinafter, first, the sunglasses will be described before the optical sheet according to the embodiment of the present invention is described.

<Sunglasses>

FIG. 1 is a perspective view showing an embodiment of sunglasses including the lens having a bent optical sheet in which the optical sheet according to the embodiment of the present invention is formed into a bent shape. In FIG. 1, when the sunglasses are worn on a head portion of a user, a surface of the lens on an eye-side of the user is referred to as a back side surface, and a surface on an opposite side thereof is referred to as a front side surface.

As shown in FIG. 1, sunglasses 100 include a frame 20 and a lens 30 (lens for eyeglasses).

In the present specification, the term "lens (lens for eyeglasses)" includes both a lens having a light collecting function and a lens not having a light collecting function.

The frame 20 is a member which is worn on the head portion of the user to dispose the lens 30 in the vicinity of the front of the eyes of the user.

The frame 20 has a rim portion 21, a bridge portion 22, a temple portion 23, and a nose pad portion 24.

The rim portion 21 has a ring shape, and one rim portion is provided for each of the right eye and the left eye to

correspond thereto, and the lens 30 is installed inside. As a result, the user can visually recognize external information through the lens 30.

In addition, the bridge portion 22 has a rod shape, and is located in front of an upper part of a nose of the user when worn on the head portion of the user to connect the pair of the rim portions 21.

The temple portion 23 has a bow shape, and is connected to an edge portion on a side opposite to a location of each of the rim portions 21 to which the bridge portion 22 is connected. The temple portion 23 is hung on an ear of the user when worn on the head portion of the user.

The nose pad portion 24 is provided on an edge portion of each of the rim portions 21 corresponding to the nose of the user when the sunglasses 100 are worn on the head portion of the user, abuts the nose of the user, and has a shape corresponding to an abutting portion of the nose. As a result, the worn state can be stably maintained.

A constituent material of each part constituting the frame 20 is not particularly limited, and various metal materials, various resin materials, and the like can be used, for example. A shape of the frame 20 is not limited to the illustrated shape as long as the shape is mountable on the head portion of the user.

The lens 30 (optical component according to the embodiment of the present invention) is mounted on each of the rim portions 21. The lens 30 is a member having light transmittance and having a plate-like overall shape which is bent toward the outside, and includes a resin layer 35 (molded layer) and a bent optical sheet 10.

The resin layer 35 has light transmittance, is located on the back side of the lens, and has a light collecting function in a case of imparting a light collecting function to the lens 30.

A constituent material of the resin layer 35 is not particularly limited as long as it is a resin material having light transmittance, and examples thereof include various thermoplastic resins and various curable resins such as a thermosetting resin and a photocurable resin, in which one or two or more kinds thereof can be used in combination.

Examples of the resin material include polyolefins such as polyethylene, polypropylene, and an ethylenepropylene copolymer, polyvinyl chloride, polystyrene, polyamide, polyimide, polycarbonate, poly-(4-methylpentene-1), ionomer, an acrylic resin, polymethyl methacrylate, an acrylonitrile-butadiene-styrene copolymer (ABS resin), an acrylonitrile-styrene copolymer (AS resin), a butadiene-styrene copolymer, polyesters such as polyethylene terephthalate (PET) and polybutylene terephthalate (PBT), polyether, polyether ketone (PEK), polyether ether ketone (PEEK), polyetherimide, polyacetal (POM), polyphenylene oxide, polysulfone, polyethersulfone, polyphenylene sulfide, polyarylate, aromatic polyester (liquid crystal polymer), polytetrafluoroethylene, polyvinylidene fluoride, other fluororesins, an epoxy resin, a phenol resin, a urea resin, a melamine resin, a silicone resin, polyurethane; and copolymers, blend materials, polymer alloys mainly made of these resins. Among these, it is preferable that the resin material is the same type or the same as a resin material constituting, as a main material, a first base material 11 included in the bent optical sheet 10, which will be described later. As a result, it is possible to improve adhesiveness between the resin layer 35 and the bent optical sheet 10. In addition, since a difference in refractive index between the resin layer 35 and the bent optical sheet 10 (first base material 11) can be set to be low, it is possible to accurately suppress or prevent light from being scattered and reflected between the resin layer 35 and the bent optical sheet 10, and thus the light can be transmitted between the resin layer 35 and the bent optical sheet 10 with excellent light transmittance. The difference in refractive index between the resin layer 35 and the bent optical sheet 10 (first base material 11) is preferably 0.1 or less and more preferably 0.05 or less. As a result, an effect obtained by setting the above-described difference in refractive index to be low can be more remarkably exhibited.

A thickness of the resin layer 35 is not particularly limited, and is preferably 0.5 mm or more and 5.0 mm or less, and more preferably 1.0 mm or more and 3.0 mm or less, for example. As a result, it is possible to achieve both relatively high intensity and weight reduction in the lens 30.

The bent optical sheet 10 is a bent resin substrate that is formed into and bonded to a bent shape corresponding to the shape of the outer surface of the resin layer 35, that is, the bent convex surface; and the half-mirror property is imparted to the sunglasses 100 by the lens 30 including the bent optical sheet 10. As a result, the sunglasses 100 exhibit a function as sunglasses having a half-mirror property. The bent optical sheet 10 is obtained by forming the optical sheet according to the embodiment of the present invention into a bent shape, and the details thereof will be described later.

As described above, the lens 30 included in the sunglasses 100 may be a lens having a light collecting function or a lens not having a light collecting function.

In addition, from the viewpoint of fashionability, lightness, and the like, the sunglasses 100 may be sunglasses having a configuration without the frame, in addition to the configuration having the frame 20 as described above.

Furthermore, in the present embodiment, the eyeglasses including the lens 30 are applied to the sunglasses 100, but the present invention is not limited to this, and the eyeglasses may be, for example, eyeglasses with a prescription, fake eyeglasses, and goggles that protect the eyes from wind, rain, dust, garbage, chemicals, and the like.

In the sunglasses 100 (eyeglasses) having the above-described configuration, the lens 30 included in the sunglasses 100 is manufactured, for example, by a manufacturing method of the lens 30 as shown below.

<Manufacturing method of lens>

FIGS. 2A to 2D are schematic views for describing a manufacturing method of the lens having a bent optical sheet in which the optical sheet according to the embodiment of the present invention is formed into a bent shape. Hereinafter, for convenience of description, the upper side of FIGS. 2A to 2D will be referred to as "upper" and the lower side thereof will be referred to as "lower".

Hereinafter, each step of the manufacturing method of the lens 30 including the bent optical sheet 10 having the bent shape of the optical sheet 15 according to the embodiment of the present invention will be described in detail.

[1] First, an optical sheet 15 (optical sheet according to the embodiment of the present invention) having a flat overall shape, in which a first base material 11, a half mirror layer 13, and a second base material 12 are laminated in this order, is prepared; by attaching protective films 50 (masking tapes) to both surfaces of the optical sheet 15, the protective films 50 are attached to the both surfaces of the optical sheet 15 to obtain a multilayer laminate 150 (see FIG. 2A).

[2] Next, as illustrated in FIG. 2B, the prepared multilayer laminate 150, that is, the optical sheet 15 in a state in which the protective films 50 are attached to the both surfaces of the optical sheet 15 is punched in a thickness direction thereof, thereby forming the multilayer laminate 150 into a circular shape in a plan view.

[3] Next, as shown in FIG. 2C, a thermal bending processing is performed on the multilayer laminate 150 having a circular shape under heating, thereby forming a bent multilayer laminate 200 having a bent shape, in which a first base material 11 side (one surface side) is a bent concave surface and a second base material 12 side (the other surface side) is a bent convex surface; as a result, the optical sheet 15 having a flat plate shape can be formed into the bent optical sheet 10 having a bent shape in a state in which the protective films 50 are attached to both surfaces.

The thermal bending processing is typically carried out by press molding or vacuum molding.

As described above, in the present embodiment, a heating temperature (molding temperature) of the multilayer laminate 150 (optical sheet 15) in this case is set to preferably approximately 120°C or higher and 250°C or lower and more preferably approximately 130°C or higher and 180°C or lower, in consideration of the fact that the optical sheet 15 includes the base materials 11 and 12 and the fact of melting or softening temperature of the base materials 11 and 12. By setting the heating temperature within a certain range, the optical sheet 15 can be softened or melted while preventing degeneration and deterioration of the optical sheet 15, and the optical sheet 15 can be reliably thermally bent to form the bent optical sheet 10 having a bent shape.

[4] Next, the protective films 50 are peeled off from the bent optical sheet 10 which has been subjected to the thermal bending. Thereafter, as shown in FIG. 2D, by an insert injection molding method or the like, the resin layer 35 made of a resin material as a main material is injection-molded onto the bent concave surface of the bent optical sheet 10 in a state in which the bent optical sheet 10 is adsorbed to a mold 40 including the bent concave surface serving as the bent shape, such that the bent concave surface of the mold 40 and the bent convex surface of the bent optical sheet 10 are in contact with each other. That is, the constituent material of the resin layer 35 in a molten state is cooled and solidified in a state of being in contact with the bent concave surface of the bent optical sheet 10, so that the resin layer 35 is directly brought into contact with the bent concave surface of the bent optical sheet 10 without using an adhesive layer or the like. As a result, the lens 30 (optical component according to the embodiment of the present invention) including the bent optical sheet 10 which is thermally bent and the resin layer 35 is manufactured.

A heating temperature (molding temperature) of the constituent material of the resin layer 35, for maintaining the constituent material in a molten state in a case of performing the injection molding of the resin layer 35, is appropriately set according to the type of the constituent material of the resin layer 35, and in a case where the constituent material of the resin layer 35 is the same type or the same as a constituent material of the first base material 11 included in the bent optical sheet 10, which will be described later, it is set to preferably 180°C or higher and 320°C or lower and more preferably approximately 230°C or higher and 300°C or lower. By setting the heating temperature within a certain range, the constituent material of the resin layer 35 in a molten state can be reliably supplied to the bent concave surface of the bent optical sheet 10.

In addition, among insert injection molding methods, an injection compression molding method is preferably used. The injection compression molding method is a method of injecting the resin material for forming the resin layer 35 into the mold 40 at a low pressure and then closing the mold 40 at a high pressure to apply a compression force to the resin material. Therefore, the injection compression molding method is preferably used because the resin layer 35 as a molded article, that is, the lens 30 is less likely to cause optical anisotropy due to molding distortion or local alignment of resin molecules during the molding. In addition, by controlling the mold compression force uniformly applied to the resin material, the resin material can be cooled with a constant specific volume, so that the resin layer 35 having high dimensional accuracy can be obtained.

In the bent optical sheet 10 included in the lens 30, which is manufactured by the manufacturing method of the lens described above, a configuration in which the optical sheet 15 according to the embodiment of the present invention is

formed into a bent shape is used. Hereinafter, each embodiment of the optical sheet 15 will be described in detail.

<<First embodiments>>

FIG. 3 is a longitudinal sectional view showing a first embodiment of the optical sheet according to the present invention, and FIG. 4 is an enlarged cross-sectional view of a part of the half mirror layer included in the optical sheet, which is located in a region [B] surrounded by a one-dot chain line in FIG. 3.

Hereinafter, for convenience of description, the upper side of FIG. 3 will be referred to as "upper" and the lower side thereof will be referred to as "lower". In addition, in FIGS. 3 and 4, an x direction is referred to as "left-right direction" or "flow direction (MD)", a y direction is referred to as "front-rear direction" or "vertical direction (TD)", and a z direction is referred to as "up-down direction". In addition, in FIGS. 3 and 4, a thickness direction of the optical sheet is illustrated with exaggeration, so that the actual dimensions are significantly different.

In the present embodiment, as shown in FIG. 3, the optical sheet 15 (optical substrate) includes a first base material 11 which has light transmittance, a second base material 12 which is provided on one surface side of the first base material 11 and has light transmittance, and a half mirror layer 13 which is provided between the first base material 11 and the second base material 12.

In the optical sheet 15, by setting the positional relationship of disposition of each layer as described above, the half mirror layer 13 is positioned between the first base material 11 and the second base material 12, and is not exposed on the surface of the optical sheet 15. That is, the half mirror layer 13 does not constitute an outermost layer exposed on an upper surface or a lower surface of the optical sheet 15. Therefore, it is possible to reliably prevent sand dust, rain, or the like from colliding with the half mirror layer 13 or it is reliably possible to prevent the half mirror layer 13 from being worn by other members, such as a case in which the half mirror layer 13 constitutes the outermost layer. Therefore, it is possible to reliably prevent the half mirror layer 13 from being damaged due to the collision or the friction. Accordingly, the optical sheet 15 maintains designability and optical characteristics for a long period of time.

Furthermore, in the optical sheet 15 having such a configuration, the half mirror layer 13 is composed of a laminate in which a high-refractive-index layer 31 and a low-refractive-index layer 32 are alternately laminated in a repeated manner. As a result, since the half mirror layer 13 selectively reflects incident light in a specific wavelength range and transmits the rest of the incident light, in a case where a person is located on a back surface side of the optical sheet 15, that is, in a case where the person wears the sunglasses 100, the person (wearer) can visually recognize a front surface side of the optical sheet 15 through the optical sheet 15. In addition, since the light in the specific wavelength range, reflected on the front surface side of the optical sheet 15, is visually recognized by a person located on a side opposite to the wearer through the optical sheet 15, it is possible to obtain the optical sheet 15 having designability.

Hereinafter, each layer constituting the optical sheet 15 will be described.

The first base material 11 supports the half mirror layer 13 (laminate), and has a function as a protective layer which protects the half mirror layer 13 by constituting the outermost layer of the optical sheet 15 in a state of disposing the half mirror layer 13 between the first base material 11 and the second base material 12 described later.

In the optical sheet 15, the half mirror layer 13 is not exposed on the surface of the optical sheet 15 by the first base material 11 and the second base material 12 described later, constituting the outermost layer of the optical sheet 15. Therefore, in the lens 30 including the optical sheet 15, it is possible to reliably prevent sand dust, rain, or the like from colliding with the half mirror layer 13 or it is reliably possible to prevent the half mirror layer 13 from being worn by other members, such as a case in which the half mirror layer 13 constitutes the outermost layer to be exposed. Therefore, it is possible to reliably prevent the half mirror layer 13 from being damaged due to the collision or the friction. Accordingly, the designability and the optical characteristics of the optical sheet 15 can be maintained for a long period of time.

The first base material 11 is not particularly limited as long as it is made of a resin material having transparency as a main material, and preferably contains a transparent resin (base resin) having thermoplasticity as a main material.

The transparent resin is not particularly limited, and examples thereof include an acrylic resin, a polystyrene-based resin, a polyethylene-based resin, a polypropylene-based resin, a polyester-based resin such as polyethylene terephthalate (PET) and polyethylene naphthalate (PEN), a polycarbonate-based resin, a polyamide-based resin, a cycloolefin-based resin, a vinyl chloride-based resin, and a polyacetal-based resin; and one kind or two or more kinds thereof can be used in combination. Among these, a polycarbonate-based resin or a polyamide-based resin is preferable, and a polycarbonate-based resin is particularly preferable. The polycarbonate-based resin is rich in mechanical strength such as transparency (light transmittance) and rigidity, and has high heat resistance. Therefore, by using the polycarbonate-based resin as the transparent resin, it is possible to improve the transparency of the first base material 11, and the impact resistance and heat resistance of the first base material 11.

As the polycarbonate-based resin, various resins can be used, and an aromatic polycarbonate-based resin is preferable. The aromatic polycarbonate-based resin includes an aromatic ring in the main chain thereof, and thus the first base material 11 having more excellent strength can be obtained.

The aromatic polycarbonate-based resin is synthesized, for example, by an interfacial polycondensation

reaction between bisphenol and phosgene, an ester exchange reaction between bisphenol and diphenyl carbonate, or the like.

Examples of the bisphenol include bisphenol A and a bisphenol (modified bisphenol) serving as an origin of a repeating unit of a polycarbonate represented by Formula (1A) .

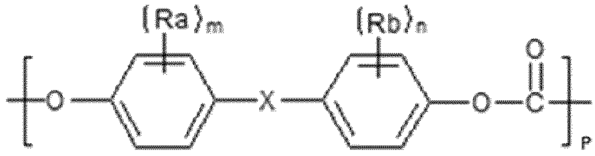

(1A)

(in Formula (1A), X represents an alkyl group having 1 to 18 carbon atoms, an aromatic group, or a cyclic aliphatic group, Ra and Rb each independently represent an alkyl group having 1 to 12 carbon atoms, m and n each independently represent an integer of 0 to 4, and p represents the number of repeating units)

Specific examples of the above-described bisphenol serving as the origin of the repeating unit of the polycarbonate represented by Formula (1A) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, and 2,2'-bis(4-hydroxy-3-methylphenyl)propane, in which one or two or more kinds thereof can be used in combination.

As the polycarbonate-based resin, a bisphenol-type polycarbonate-based resin having a skeleton derived from bisphenol is particularly preferably used as a main component. By using such a bisphenol-type polycarbonate-based resin, the first base material 11 exhibits more excellent strength.

In addition, as long as the first base material 11 has light transmittance, the color thereof may be colorless or any color such as red, blue, and yellow.

These colors can be selected by containing a dye or a pigment in the first base material 11. Examples of the dye include an acid dye, a direct dye, a reactive dye, and a basic dye; and one or two or more kinds selected from these dyes can be used in combination.

Specific examples of the dye include C. I. Acid Yellow 17, 23, 42, 44, 79, and 142; C. I. Acid Red 52, 80, 82, 249, 254, and 289; C. I. Acid Blue 9, 45, and 249; C. I. Acid Black 1, 2, 24, and 94; C. I. Food Black 1 and 2; C. I. Direct Yellow 1, 12, 24, 33, 50, 55, 58, 86, 132, 142, 144, and 173; C. I. Direct Red 1, 4, 9, 80, 81, 225, and 227; C. I. Direct Blue 1, 2, 15, 71, 86, 87, 98, 165, 199, and 202; C. I. Direct Black 19, 38, 51, 71, 154, 168, 171, and 195; C. I. Reactive Red 14, 32, 55, 79, and 249; and C. I. Reactive Black 3, 4, and 35.

The first base material 11 may contain various additives such as an antioxidant, a filler, a plasticizer, a light stabilizer, an ultraviolet absorber, an infrared absorber, and a flame retardant as necessary, in addition to the transparent resin, the dye, and the pigment described above.

In addition, a refractive index of the first base material 11 at a wavelength of 589 nm is preferably 1.3 or more and 1.8 or less, and more preferably 1.4 or more and 1.65 or less. By setting the refractive index of the first base material 11 to the above-described numerical range, it is possible to accurately suppress or prevent inhibition of the function as the half mirror layer 13 which transmits a part of the incident light and reflects the rest.

An average thickness of the first base material 11 is set to preferably 0.1 mm or more and 1.5 mm or less, and more preferably 0.2 mm or more and 0.8 mm or less. By setting the average thickness of the first base material 11 within such a range, it is possible to accurately suppress or prevent the optical sheet 15 from deflection while achieving the thinning of the optical sheet 15. Therefore, chromaticity with the light in a specific wavelength range, which is selectively reflected by the half mirror layer 13, can be more uniformly visually recognized over the entire optical sheet 15.

The second base material 12 supports the half mirror layer 13 (optical laminate), and has a function as a protective layer which protects the half mirror layer 13 by constituting the outermost layer of the optical sheet 15 in a state of disposing the half mirror layer 13 between the first base material 11 and the second base material 12.

In the optical sheet 15, the half mirror layer 13 is not exposed on the surface of the optical sheet 15 by the second base material 12 constituting the outermost layer of the optical sheet 15. Therefore, in the lens 30 including the optical sheet 15, it is possible to reliably prevent sand dust, rain, or the like from colliding with the half mirror layer 13 or it is reliably possible to prevent the half mirror layer 13 from being worn by other members, such as a case in which the half mirror layer 13 constitutes the outermost layer to be exposed. Therefore, it is possible to reliably prevent the half mirror layer 13 from being damaged due to the collision or the friction. Accordingly, the designability and the optical characteristics of the optical sheet 15 can be maintained for a long period of time.

In addition, the second base material 12 can be made of the same constituent material as those described in the first base material 11. The constituent material of the second base material 12 and the constituent material of the first base material 11 may be the same (or of the same type) or different from each other.

Furthermore, a refractive index of the second base material 12 at a wavelength of 589 nm may be the same as or

different from the refractive index of the first base material 11, and is preferably 1.3 or more and 1.8 or less and more preferably 1.4 or more and 1.65 or less. By setting the refractive index of the second base material 12 to the above-described numerical range, it is possible to accurately suppress or prevent inhibition of the function as the half mirror layer 13 which transmits a part of the incident light and reflects the rest.

In addition, an average thickness of the second base material 12 may be the same as or different from the average thickness the first base material 11, and for example, it is preferably 0.2 mm or more and 1.5 mm or less and more preferably 0.2 mm or more and 0.8 mm or less. By setting the average thickness of the second base material 12 within such a range, it is possible to accurately suppress or prevent the optical sheet 15 from deflection while achieving the thinning of the optical sheet 15. Therefore, chromaticity with the light in a specific wavelength range, which is selectively reflected by the half mirror layer 13, can be more uniformly visually recognized over the entire optical sheet 15.

In addition, the first base material 11 and the second base material 12 described above preferably have a glass transition point of 105°C or higher, same the high-refractive-index layer 31 and the low-refractive-index layer 32 included in the half mirror layer 13, which are described later. As a result, heat resistance and thermal bending properties of the first base material 11 and the second base material 12 can be further improved, and thus heat resistance and thermal bending properties of the optical sheet 15 can be further improved.

The half mirror layer 13 is an interlayer located at a center of the optical sheet 15 in the thickness direction, and in the present invention, the half mirror layer 13 selectively reflects light in a specific wavelength range and transmits the rest, which is light not reflected by the reflection.

As shown in FIG. 4, the half mirror layer 13 includes a repeating portion 33 in which the high-refractive-index layer 31 having a high refractive index with respect to light in a visible light region and the low-refractive-index layer 32 having a low refractive index with respect to light in a visible light region are alternately laminated in a repeated manner. That is, by forming a multilayer laminate in which the repeating portions 33 are laminated a plurality of times, the half mirror layer 13 has a repeated configuration in which one high-refractive-index layer 31 is interposed between two low-refractive-index layers 32.

In the half mirror layer 13, by a configuration in which the high-refractive-index layer 31 contains a resin material having a high refractive index with respect to light in a visible light region and the low-refractive-index layer 32 contains a resin material having a low refractive index with respect to light in a visible light region, a difference in refractive index with respect to light in a visible light region between the high-refractive-index layer 31 and the low-refractive-index layer 32 can be increased, and a difference in refractive index with respect to light which is not reflected can be reduced. As a result, the half mirror layer 13 can be imparted with a function as a multilayer laminate, that is, a multilayer reflective plate which selectively reflects light in a specific wavelength range in a visible light region and transmits light in the remaining range, which is not reflected, as transmitted light. In other words, in a case where light in a visible light region is incident on the half mirror layer 13 as incident light, the half mirror layer 13 blocks (reflects) light (reflected light) reflected from the incident light to the maximum extent, that is, transmits the light to the minimum extent, and in a case where light (transmitted light) which is not reflected is incident on the half mirror layer 13 as incident light, the half mirror layer 13 exhibits a function as a multilayer reflective plate which blocks the transmitted light to the minimum extent, that is, transmits the transmitted light to the maximum extent.

Here, in order to selectively reflect the light in a specific wavelength range in a visible light region and transmit light in the remaining range, which is not reflected, as transmitted light, specifically, in the half mirror layer 13, in a case where a refractive index of the high-refractive-index layer 31 at a wavelength of 589 nm is denoted as N1 and a refractive index of the low-refractive-index layer 32 at a wavelength of 589 nm is denoted as N2, a difference in refractive index (N1 - N2) is preferably set to 0.05 or more and 0.25 or less, and more preferably set to 0.08 or more and 0.25 or less. By setting the difference in refractive index (N1 - N2) at a wavelength of 589 nm within the above-described range, the difference in refractive index with respect to the light in a visible light region is set to be large between the high-refractive-index layer 31 and the low-refractive-index layer 32, and the light in a visible light region can be reliably blocked (reflected) to the maximum extent.

The specific wavelength range of visible light, in which the light in a visible light region is blocked (reflected) to the maximum extent and light which is not reflected is blocked to the minimum extent, and an intensity of the light in the wavelength range are adjusted to a desired magnitude (within a range) by appropriately setting the type of the resin material contained in each of the high-refractive-index layer 31 and the low-refractive-index layer 32, the number of repetitions of the high-refractive-index layer 31 and the low-refractive-index layer 32 in the half mirror layer 13 (repeating portion 33), the thickness of the half mirror layer 13 (the high-refractive-index layer 31 and the low-refractive-index layer 32), and the like.

Therefore, since the optical sheet 15 is provided in the lens 30 such that the bent optical sheet 10 is formed into a bent shape, in a case where external light, that is, direct light or reflected light of the sunlight, which is emitted from the outside of the sunglasses 100, is transmitted through the optical sheet 15, the light in a specific wavelength range in a visible light region is reflected by the optical sheet 15, and the remaining light, that is, attenuated light which is not reflected reaches the eyes of the person wearing the sunglasses 100. As a result, the light in a specific wavelength range among

visible light included in the direct light of the sunlight or the reflected light is suppressed from entering the eye, and thus, recognition of an object to be visually recognized by the wearer can be improved. On the other hand, since light (reflected light) in a specific wavelength range, reflected by the optical sheet 15, is visually recognized by a person located on the side opposite to the wearer through the lens 30 (optical sheet 15), it is possible to improve the designability of the sunglasses 100. As described above, the optical sheet 15 functions as a reflective plate which selectively reflects light in a specific wavelength range of visible light and selectively transmits the remaining light.

In addition, since the optical sheet 15 is subjected to the thermal bending processing in the above-described step [3] and the injection molding processing in the above-described step [4] in the manufacturing method of the lens described above, the optical sheet 15 undergoes thermal history. In addition, as described above, since the heating temperature during the processing is preferably set to approximately 120°C or higher and 250°C or lower in the above-described step [3], and preferably set to approximately 180°C or higher and 320°C or lower in the above-described step [4], the half mirror layer 13 included in the optical sheet 15 is required to have excellent heat resistance.

As described above, the half mirror layer 13 exhibits a characteristic of reflecting light in a specific wavelength range in a visible light region to the maximum extent and transmitting light in the remaining wavelength range, which is not reflected, to the maximum extent. Therefore, it can be said that the fact that the half mirror layer 13 exhibits excellent heat resistance means that the characteristics of the half mirror layer 13 are suitably maintained even in a case where the half mirror layer 13 is exposed to severe conditions.

Therefore, with regard to a main material of the high-refractive-index layer 31 and a main material of the low-refractive-index layer 32 constituting the half mirror layer 13, in a case where a glass transition point of a resin material contained in the high-refractive-index layer 31, having a high refractive index with respect to light in a visible light region, is denoted as Tg1 and a glass transition point of a resin material contained in the low-refractive-index layer 32, having a low refractive index with respect to light in a visible light region, is denoted as Tg2, it is preferable to satisfy a relationship that Tg1 are Tg2 are 105°C or higher. In this manner, by preferably selecting a material in which both Tg1 and Tg2 are 105°C or higher, both the high-refractive-index layer 31 and the low-refractive-index layer 32 have excellent heat resistance. Therefore, it is possible to accurately suppress or prevent a film thickness from changing in the refractive index layer having a lower glass transition point among the low-refractive-index layer 32 and the high-refractive-index layer 31. Therefore, in the half mirror layer 13 included in the optical sheet 15, since deterioration of the function as a reflective plate which selectively reflects light in a specific wavelength range (visible light) is accurately suppressed or prevented, the half mirror layer 13 exhibits excellent heat resistance. As the resin material having a low refractive index in the low-refractive-index layer 32, a material having a lower glass transition point than the resin material having a high refractive index, contained as the main material of the high-refractive-index layer 31, is generally selected. Therefore, by using a material having a glass transition point Tg2 of 105°C or higher as the resin material having a low refractive index, the above-described effect can be reliably exhibited.

In the optical sheet 15 including the half mirror layer 13, when the optical sheet 15 is pressed against a metal mold to be formed into the bent optical sheet 10 having a bent shape with a curvature radius of 60 mm at a temperature higher than a higher glass transition point between the glass transition point Tg1 of the main material constituting the high-refractive-index layer 31 and the glass transition point Tg2 of the main material constituting the low-refractive-index layer 32 by 10°C, in a case where a reflectivity of the bent optical sheet 10 with respect to light having a wavelength of 589 nm is denoted as R1 [%] and a reflectivity of the bent optical sheet 10 which has been stored in a heat circulation oven in a temperature environment of 105°C for 1,000 hr with respect to the light having a wavelength of 589 nm is denoted as R2 [%], reflectivity retention obtained by $R2/R1 \times 100$ [%] is preferably 80% or more, more preferably 85% or more, and still more preferably 90% or more.

As described above, even in a case where the bent optical sheet 10 which has a bent shape of being bent with a curvature radius of 60 mm is stored for 1,000 hr in a temperature environment of 105°C, which is an extremely severe condition, the above-described reflectivity retention is maintained at equal to or more than the above-described lower limit value. In this manner, since the above-described reflectivity retention is maintained at a proportion equal to or more than the above-described lower limit value, it can be said that the half mirror layer 13 exhibits excellent heat resistance. In addition, the reflectivity R1 of the bent optical sheet 10 with respect to the light having a wavelength of 589 nm is preferably 40% or more, and more preferably 45% or more and 70% or less. It can be said that such a bent optical sheet 10 reflects light in a visible light region with excellent reflectivity.

In addition, as described above, in the repeating portion 33 (laminate), the specific wavelength range of visible light, in which the light in a visible light region is blocked (reflected) to the maximum extent and light which is not reflected is blocked to the minimum extent, and an intensity of the light in the wavelength range are adjusted to a desired magnitude (within a range) by appropriately setting the type of the resin material contained in each of the high-refractive-index layer 31 and the low-refractive-index layer 32, the number of repetitions of the high-refractive-index layer 31 and the low-refractive-index layer 32 in the half mirror layer 13 (repeating portion 33), the thickness of the half mirror layer 13 (the high-refractive-index layer 31 and the low-refractive-index layer 32), and the like.

In such a half mirror layer 13 (repeating portion 33), specifically, by using sodium D-line (589 nm) which is used as

a representative value of a standard wavelength of visible light, the magnitude of the difference in refractive index (N1 - N2) between the refractive index N1 of the high-refractive-index layer 31 and the refractive index N2 of the low-refractive-index layer 32 at a wavelength of 589 nm is preferably defined as 0.05 or more and 0.25 or less. Therefore, the half mirror layer 13 (repeating portion 33), that is, the reflective plate can reflect light in a specific wavelength range in a visible light region, specifically, visible light in a wavelength range of 400 nm or more and 780 nm or less to the maximum extent.

Furthermore, by selecting, as the main material of the high-refractive-index layer 31 and the main material of the low-refractive-index layer 32, a material preferably satisfying the relationship that Tg1 and Tg2 are 105°C or higher, with the glass transition point Tg1 of the resin material having a high refractive index with respect to light in a visible light region, contained in the high-refractive-index layer 31, and the glass transition point Tg2 of the resin material having a low refractive index with respect to light in a visible light region, contained in the low-refractive-index layer 32, the half mirror layer 13 (repeating portion 33), that is, the reflective plate (multilayer reflective plate) can exhibit excellent heat resistance.

As described above, as each of the main material of the high-refractive-index layer 31, that is, the resin material having a high refractive index with respect to light in a visible light region, and the main material of the low-refractive-index layer 32, that is, the resin material having a low refractive index with respect to light in a visible light region, with the fact that the difference in refractive index (N1 - N2) is preferably 0.05 or more and 0.25 or less and that Tg1 and Tg2 are preferably 105°C or higher, at least one of an amorphous polycarbonate-based resin, polystyrene-based resin, polyether-based resin, styrene-based resin, polyester-based resin, or acrylic resin is preferable; and at least one of a polycarbonate-based resin, a polyether-based resin, or a polyester-based resin is more preferable. By appropriately selecting the main materials of the high-refractive-index layer 31 and the low-refractive-index layer 32 from these resin materials, the half mirror layer 13 including the high-refractive-index layer 31 and the low-refractive-index layer 32 can satisfy both the fact that the difference in refractive index (N1 - N2) is 0.05 or more and 0.25 or less and the fact that Tg1 and Tg2 are 105°C or higher.

In consideration of the above points, as the main material of the high-refractive-index layer 31, at least one of a polyester-based resin such as polycarbonate (PC), polyethylene terephthalate (PET), and polyethylene naphthalate (PEN), polyether sulfone (PES), or polyarylate (PAR) is suitably selected.

In addition, as the main material of the low-refractive-index layer 32, at least one of a polyester-based resin such as polycarbonate (PC), polyethylene terephthalate (PET), and polyethylene naphthalate (PEN), an acrylic-based resin such as polymethyl methacrylate (PMMA), a styrene-based resin such as polystyrene (PS) and acrylonitrile-styrene copolymer (AS), or polyarylate (PAR) is suitably selected.

In a case where such a resin material is used, specific examples of a combination of the main materials each contained in the high-refractive-index layer 31 and the low-refractive-index layer 32 include a combination of polycarbonate (PC) and polymethyl methacrylate (PMMA), a combination of polyarylate (PAR) and polymethyl methacrylate (PMMA), a combination of polyethylene terephthalate (PET) and polymethyl methacrylate (PMMA), a combination of polyethersulfone (PES) and polyarylate (PAR), a combination of polyethylene naphthalate (PEN) and an acrylonitrile-styrene copolymer (AS), and a combination of polyethylene naphthalate (PEN) and polymethyl methacrylate (PMMA). According to such a combination, both the fact that the difference in refractive index (N1 - N2) is 0.05 or more and 0.25 or less and the fact that Tg1 and Tg2 are 105°C or higher can be more easily satisfied.

Each of the high-refractive-index layer 31 and the low-refractive-index layer 32 may contain an additive such as a filling material, in addition to the above-described main materials. As a result, the half mirror layer 13 including the high-refractive-index layer 31 and the low-refractive-index layer 32 more easily satisfies both the fact that the difference in refractive index (N1 - N2) is 0.05 or more and 0.25 or less and the fact that Tg1 and Tg2 are 105°C or higher.

In addition, the filler is not particularly limited, and examples thereof include inorganic filling materials such as silica, alumina, calcium carbonate, strontium carbonate, calcium phosphate, kaolin, talc, and smectite, and organic filling materials such as crosslinked polystyrene and a styrene-divinylbenzene copolymer. One or two or more kinds thereof can be used in combination, and among these, at least one kind strontium carbonate or smectite is preferable, and strontium carbonate is more preferable.

In addition, the filler may have any shape such as spherical or flat, or may be granular, pellet-like, or flaky, but is preferably contained in a particle form.

In the high-refractive-index layer 31 and the low-refractive-index layer 32 obtained by the above-described combination of the resin materials, the glass transition point Tg1 of the resin material having a high refractive index with respect to light in a visible light region and the glass transition point Tg2 of the resin material having a low refractive index with respect to light in a visible light region preferably satisfy a relationship that Tg1 and Tg2 are 105°C or higher, that is, it is preferable to satisfy a relationship that a lower temperature between Tg1 and Tg2 is 105°C or higher, it is more preferable to satisfy a relationship that a lower temperature between Tg1 and Tg2 is 110°C or higher and 250°C or lower, and it is still more preferable to satisfy a relationship that a lower temperature between Tg1 and Tg2 is 110°C or higher and 200°C or lower. In addition, it is preferable that a relationship of $0°C \leq |Tg1 - Tg2| \leq 60°C$ is satisfied, and it is more preferable that a relationship of $25°C \leq |Tg1-Tg2| \leq 60°C$ is satisfied. In this manner, by selecting a combination in which both Tg1 and Tg2 are within the above-described range and the difference between both is equal to or lower than the above-described upper limit value, both the high-refractive-index layer 31 and the low-refractive-index layer 32 have excellent heat resistance, and

thus the half mirror layer 13 which reliably exhibits excellent heat resistance can be obtained.

In addition, the difference in refractive index (N1 - N2) which is the relationship expression between the refractive index N1 of the high-refractive-index layer 31 at a wavelength of 589 nm and the refractive index N2 of the low-refractive-index layer 32 at a wavelength of 589 nm is preferably 0.05 or more and 0.25 or less; and it is preferable that the refractive index N1 of the high-refractive-index layer 31 at a wavelength of 589 nm is 1.57 or more and 1.85 or less and the refractive index N2 of the low-refractive-index layer 32 at a wavelength of 589 nm is 1.49 or more and 1.67 or less. As a result, light in a specific wavelength range in a visible light region can be more reliably reflected.

Furthermore, an average thickness of each of the high-refractive-index layer 31 and the low-refractive-index layer 32 is preferably 50 nm or more and 300 nm or less, and more preferably 50 nm or more and 200 nm or less. With such an average thickness within the range, an optical thickness (average thickness of the layer × refractive index of the layer) of each of the high-refractive-index layer 31 and the low-refractive-index layer 32 is set to be 1/4 of the wavelength of light in a visible light region, which is selectively reflected. As a result, light reflected at the interface can be mutually reinforced, so that the half mirror layer 13 can selectively reflect light in a specific wavelength range in a visible light region.

In addition, the number of laminations of the high-refractive-index layer 31 and the low-refractive-index layer 32 in the repeating portion 33 is preferably 50 or more and 750 or less, and more preferably 100 or more and 600 or less.

By setting the average thicknesses of the high-refractive-index layer 31 and the low-refractive-index layer 32, and the number of the repeating portions 33 in which the high-refractive-index layer 31 and the low-refractive-index layer 32 are laminated within the above-described ranges, it is possible to adjust the specific wavelength (wavelength range) of the light to be blocked to the maximum extent in a visible light region to a desired magnitude (within a range).

Furthermore, the half mirror layer 13 may be stretched or unstretched, but is preferably unstretched, and specifically, a thickness direction retardation (Rth) of the half mirror layer 13 at a wavelength of 589 nm, which is represented by the following calculation expression (A), is preferably 500 nm or less and more preferably 300 nm or less.

$$Rth = [(nx + ny)/2 - nz] \cdot d \quad ... \quad (A)$$

(in the calculation expression (A), nx and ny represent a principal refractive index in a plane of the half mirror layer 13, nz represents a refractive index in a thickness direction of the half mirror layer 13, and d represents a thickness of the half mirror layer 13)

Here, by selecting the stretched half mirror layer 13, it is possible to improve an apparent glass transition point of the half mirror layer 13, that is, to improve the heat resistance of the half mirror layer 13, but on the other hand, there is a problem that the thermal bending properties (processability) are deteriorated. On the other hand, in the present invention, as described above, by selecting the resin materials contained in the high-refractive-index layer and the low-refractive-index layer to satisfy the fact that Tg1 and Tg2 are preferably of 105°C or higher, excellent heat resistance are imparted to the half mirror layer 13. Furthermore, by preferably selecting the unstretched half mirror layer 13, the thermal bending properties of the half mirror layer 13 can be further improved, and thus the thermal bending properties of the optical sheet 15 can be further improved.

As described above, the optical sheet 15 includes the laminate in which the first base material 11, the half mirror layer 13, and the second base material 12 are bonded and laminated in this order, but in the manufacturing method of the lens described above, since the optical sheet 15 is subjected to the thermal bending processing in the above-described step [3], the optical sheet 15 is thermally bent into the bent optical sheet 10 having a bent shape in which the first base material 11 side (upper side) is a bent concave surface and the second base material 12 side (lower side) is a bent convex surface. Therefore, the optical sheet 15 is required to have excellent processability.

The first base material 11 and the second base material 12 contain the resin material as the main material. In addition, as described above, the half mirror layer 13 contains, as the main material of the high-refractive-index layer 31 and the main material of the low-refractive-index layer 32 constituting the half mirror layer 13, the resin material having the glass transition point Tg1 and the resin material having the glass transition point Tg2, respectively.

As described above, by using the resin material as the main materials of the first base material 11 and the second base material 12 and the main materials of the high-refractive-index layer 31 and the low-refractive-index layer 32 constituting the half mirror layer 13, it is possible to impart excellent processability to the optical sheet 15 composed of the laminate of these members. Therefore, when the optical sheet 15 is thermally bent into a bent shape, for example, in a case where the high-refractive-index layer 31 and the low-refractive-index layer 32 are made of a metal-based (inorganic-based) material, it is possible to accurately suppress or prevent occurrence of cracks in the high-refractive-index layer 31 and the low-refractive-index layer 32.

In the optical sheet 15 according to the embodiment of the present invention, the continuous layer of the first base material 11 and the half mirror layer 13 is formed at the interface between the first base material 11 and the half mirror layer 13, and the continuous layer of the second base material 12 and the half mirror layer 13 is formed at the interface between the second base material 12 and the half mirror layer 13. As described above, in the optical sheet 15, at the interface at which the respective layers constituting the optical sheet 15 itself are bonded to each other, a continuous layer in which

constituent materials contained in the respective layers to be bonded to each other are mixed is formed. Therefore, adhesiveness between the first base material 11 and the half mirror layer 13 and adhesiveness between the second base material 12 and the half mirror layer 13 are improved. Therefore, in the above-described step [3], in a case where the thermal bending processing is performed on the optical sheet 15 to obtain the bent optical sheet 10 having a bent shape in which the first base material 11 side (upper side) is a bent concave surface and the second base material 12 side (lower side) is a bent convex surface, it is possible to accurately suppress or prevent peeling at the interface between the first base material 11 and the half mirror layer 13 and peeling at the interface between the second base material 12 and the half mirror layer 13. Therefore, it is possible to impart more excellent processability to the optical sheet 15.

The "continuous layer" means that, at the interface between the first base material 11 and the half mirror layer 13, the constituent materials each contained in the first base material 11 and the half mirror layer 13 are mixed with each other; and more specifically, it means that, at the interface between the first base material 11 and the half mirror layer 13, the constituent material of the first base material 11 is dispersed on the half mirror layer 13 side, and the constituent material of the half mirror layer 13 is dispersed on the first base material 11 side. In addition, the "continuous layer" means that, at the interface between the second base material 12 and the half mirror layer 13, the constituent materials each contained in the second base material 12 and the half mirror layer 13 are mixed with each other; and more specifically, it means that, at the interface between the second base material 12 and the half mirror layer 13, the constituent material of the second base material 12 is dispersed on the half mirror layer 13 side, and the constituent material of the half mirror layer 13 is dispersed on the second base material 12 side.

In the optical sheet 15, when the optical sheet 15 is pressed against a metal mold to be formed into the bent optical sheet 10 having a bent shape with a curvature radius of 60 mm at a temperature higher than a higher glass transition point between the glass transition point Tg1 of the main material constituting the high-refractive-index layer 31 and the glass transition point Tg2 of the main material constituting the low-refractive-index layer 32 by 10°C, and then the bent optical sheet 10 is stored in a heat circulation oven in a temperature environment of 105°C for 1,000 hr, among 50 bent optical sheets 10, the number of bent optical sheets 10 which maintain a shape with a curvature radius of 60 $\pm$ 5 mm is preferably 48 or more, and more preferably 50.

As described above, even in a case where the bent optical sheet 10 which has a bent shape of being bent with a curvature radius of 60 mm is stored for 1,000 hr in a temperature environment of 105°C, which is an extremely severe condition, shape retentivity of the bent optical sheet 10 is maintained to be equal to or more than the above-described lower limit value. In this manner, since the above-described shape retentivity is maintained at a proportion equal to or more than the above-described lower limit value, it can be said that the bent optical sheet 10 exhibits excellent processability.

In addition, in a case where the bent optical sheet 10 is stored in a heat circulation oven in a temperature environment of 105°C for 1,000 hr as described above, among 50 bent optical sheets, the number of bent optical sheets 10 in which peeling occurs between the first base material 11 and the half mirror layer 13 or between the second base material 12 and the half mirror layer 13 is preferably 2 or less, and more preferably 0.

As described above, even in a case where the bent optical sheet 10 which has a bent shape of being bent with a curvature radius of 60 mm is stored for 1,000 hr in a temperature environment of 105°C, which is an extremely severe condition, the occurrence of the peeling in the bent optical sheet 10 is maintained to be equal to or less than the above-described upper limit value. In this manner, since the above-described occurrence of the peeling is maintained at a proportion equal to or less than the above-described upper limit value, it can be said that the bent optical sheet 10 suppresses the occurrence of the peeling between the base materials 11 and 12 and the half mirror layer 13 and exhibits excellent processability.

Furthermore, the total thickness of the optical sheet 15 is not particularly limited, but is preferably approximately 0.2 mm or more and 3.0 mm or less, and more preferably approximately 0.4 mm or more and 1.6 mm or less. As a result, it is possible to impart excellent thermal moldability to the optical sheet 15 in a case where the optical sheet 15 is molded into the bent optical sheet 10 having a bent shape, while applying excellent strength to the optical sheet 15.

The optical sheet 15 according to the present embodiment having such a configuration is obtained by integrally forming a laminate in which the first base material 11, the half mirror layer 13 that a plurality of the repeating portions 33 in which the high-refractive-index layer 31 and the low-refractive-index layer 32 are alternately laminated are formed, and the second base material 12 are bonded and laminated in this order, but more specifically, for example, the optical sheet 15 can be manufactured as follows.

That is, first, as a resin composition for forming the high-refractive-index layer 31 and the low-refractive-index layer 32, a material containing, as a main material, a resin material having a high refractive index with respect to light in a visible light region and a material containing, as a main material, a resin material having a low refractive index with respect to light in a visible light region are each prepared. After alternately stacking these layers to obtain a plurality of laminates that the repeating portions 33 (laminates) in which the high-refractive-index layer 31 and the low-refractive-index layer 32 are alternately laminated in a repeated manner are laminated a plurality of times, a resin composition containing, as a main material, a resin material for forming the first base material 11 and a resin composition containing, as a main material, a resin material for forming the second base material 12 are laminated on an upper surface and a lower surface of the

obtained plurality of laminates, respectively. As a result, an integrated body in which the first base material 11, the plurality of laminates, and the second base material 12 are laminated in this order is obtained (laminating step). In other words, the upper surface and the lower surface of the plurality of laminates are coated with the first base material 11 and the second base material 12 as coating layers (skin layers), respectively, to obtain the integrated body.

The method of obtaining the integrated body in which the first base material 11, the plurality of laminates, and the second base material 12 are laminated in this order is not particularly limited, and examples thereof include a feed block method in which a resin composition containing a resin material as a raw material for each layer is meltextruded by a plurality of extruders; a co-extrusion T die method such as a multi-manifold method; and a co-extrusion inflation method of an air-cooling type or a water-cooling type, and among these, a co-extrusion T die method is particularly preferable. The co-extrusion T die method is preferably used because it is excellent in thickness control of each layer to be formed to overlap each other in the thickness direction.

Next, the obtained integrated body is cooled to be dried and solidified (cooling step). As a result, the optical sheet 15 can be integrally obtained as the laminate in which the first base material 11, the half mirror layer 13, and the second base material 12 are bonded and laminated in this order.

<Second embodiment>

In addition, the optical sheet 15 may have a configuration as shown below, in addition to the configuration described in the first embodiment above.

FIG. 5 is a longitudinal sectional view showing a second embodiment of the optical sheet according to the present invention.

Hereinafter, for convenience of description, the upper side of FIG. 5 will be referred to as "upper" and the lower side thereof will be referred to as "lower". In addition, in FIG. 5, an x direction is referred to as "left-right direction", a y direction is referred to as "front-rear direction", and a z direction is referred to as "up-down direction". Furthermore, in FIG. 5, a thickness direction of the optical sheet is illustrated with exaggeration, so that the actual dimensions are significantly different.

Hereinafter, the second embodiment of the optical sheet according to the present invention will be described with reference to the drawing, but the differences from the above-described embodiments will be mainly described and the same matters will be not described.

The optical sheet 15 according to the present embodiment is the same as the optical sheet 15 according to the first embodiment described above, except that the optical sheet 15 according to the present embodiment further includes, as the outermost layer, coating layers 17 (hard coat layers) which coat each of the first base material 11 and the second base material 12.

That is, as shown in FIG. 5, in the present embodiment, the optical sheet 15 further includes, as the outermost layer, the coating layer 17 which coats the first base material 11 on one surface side (upper surface side) of the first base material 11. In addition, the optical sheet 15 further includes, as the outermost layer, the coating layer 17 which coats the second base material 12 on the other surface side (lower surface side) of the second base material 12. In other words, in the optical sheet 15 according to the present embodiment, a laminate in which the coating layer 17, the second base material 12, the half mirror layer 13, the first base material 11, and the coating layer 17 are laminated in this order from the lower surface side to the upper surface side of the optical sheet 15 is formed.

By adopting the configuration in which the coating layers 17 which coat each of the first base material 11 and the second base material 12 are provided as in the present embodiment, it is possible to reliably prevent the first base material 11 and the second base material 12 from being damaged.

The coating layer 17 (coat layer) is a so-called hard coat layer made of a resin composition, and as the resin composition, for example, a resin composition containing a silicon-modified (meth)acrylic resin is preferably used. Hereinafter, the resin composition containing a silicon-modified (meth)acrylic resin will be described.

(Silicon-modified (meth)acrylic resin)

The silicon-modified (meth)acrylic resin (siloxanemodified (meth)acrylate) is a polymer (prepolymer) having a main chain in which a constitutional unit derived from a (meth)acrylic monomer having a (meth)acryloyl group is repeated, and having a repeating body (branch) which is linked to the main chain, in which a constitutional unit having a siloxane bond is repeated.

That is, the silicon-modified (meth)acrylic resin is a polymer (prepolymer) in which a (meth)acrylic compound as a main chain is linked with a compound having a siloxane bond (-Si-O-Si-) as a branch.

Since the silicon-modified (meth)acrylic resin has the above-described main chain, the coating layer 17 can be imparted with excellent transparency. In addition, since the silicon-modified (meth)acrylic resin has the above-described repeating body in which the constitutional unit having a siloxane bond is repeated, the coating layer 17 can be imparted with

excellent scratch resistance and weather fastness, that is, the function as the coating layer 17 can be reliably imparted.

Specific examples of the main chain of the silicon-modified (meth)acrylic resin include a structure which is composed of repetition of constitutional units derived from a monomer having a (meth)acryloyl group, which is represented by at least one of Formula (1) or Formula (2); and examples of a structure which is composed of repetition of constitutional units derived from both monomers include a structure with a chemical formula represented by Formula (12) .

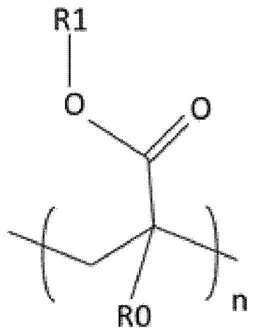

(1)

(in Formula (1), n represents an integer of 1 or more, R1's independently represent a hydrocarbon group, an organic group, or a hydrogen atom, and RO's independently represent a hydrocarbon group or a hydrogen atom)

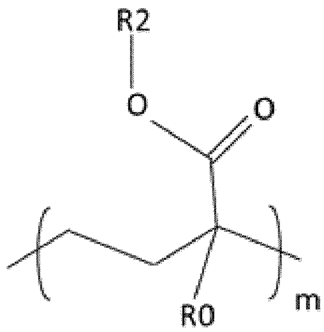

(2)

(in Formula (2), m represents an integer of 1 or more, R2's independently represent a hydrocarbon group, an organic group, or a hydrogen atom, and RO's independently represent a hydrocarbon group or a hydrogen atom)

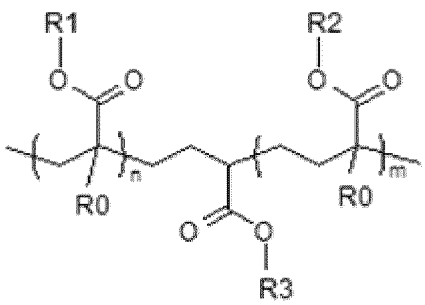

(12)

(in Formula (12), m and n each represent an integer of 1 or more, R1's, R2's, and R3's each independently represent a hydrocarbon group, an organic group, or a hydrogen atom, and RO's independently represent a hydrocarbon group or a hydrogen atom)

In addition, in the main chain having such a configuration, the repeating body (branch) in which a constitutional unit having a siloxane bond is repeated is bonded to at least one terminal or side chain of the main chain.

Since the siloxane bond has a strong bonding force, in a case where the silicon-modified (meth)acrylic resin has the repeating body including the repeating body in which the constitutional unit having a siloxane bond is repeated, it is possible to obtain the coating layer 17 having further improved heat resistance and weather fastness. In addition, since the siloxane bond has a strong bonding force, a hard coating layer 17 can be obtained, and thus the scratch resistance of the optical sheet 15 can be further increased.

Specific examples of the repeating body in which the constitutional unit having a siloxane bond is repeated include a structure composed of repeated constitutional units having a siloxane bond, which is represented by at least one

of Formula (3) or Formula (4).

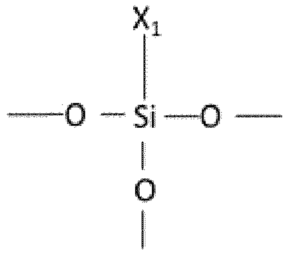 (3)

(in Formula (3), $X_1$ represents a hydrocarbon group or a hydroxyl group)

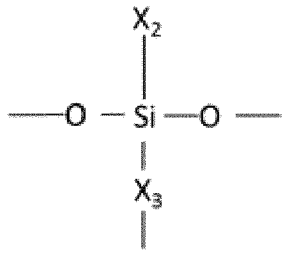 (4)

(in Formula (4), $X_2$ represents a hydrocarbon group or a hydroxyl group, and $X_3$ represents a hydrocarbon group or a divalent group in which hydrogen is eliminated from a hydroxyl group)

Specific examples of the above-described repeating body in which the constitutional unit having a siloxane bond is repeated include a structure having polyorganosiloxane and a structure having silsesquioxane. The structure of silsesquioxane may be any structure such as a random structure, a cage-like structure, and a ladder structure.

Examples of the above-described hydrocarbon group include an alkyl group such as a methyl group, an ethyl group, a propyl group, and an isopropyl group; a cycloalkyl group such as a cyclopropyl group, a cyclobutyl group, a cyclopentyl group, and a cyclohexyl group; an aryl group such as a phenyl group, a naphthyl group, and a 2-methylphenyl group; an aralkyl group such as a benzyl group, a diphenylmethyl group, and a naphthylmethyl group; and a biphenyl group.

It is preferable that an unsaturated double bond is introduced into a terminal or a side chain of the repeating body in which the constitutional unit having a siloxane bond is repeated. As a result, in a case where the resin composition contains a urethane (meth)acrylate described later, a (meth)acryloyl group included in the urethane (meth)acrylate can be bonded to the unsaturated double bond to form a network between the silicon-modified (meth)acrylic resin and the urethane (meth)acrylate. Therefore, the silicon-modified (meth)acrylic resin and the urethane (meth)acrylate are more homogeneously dispersed in the coating layer 17, and as a result, the characteristics of the coating layer 17 described above can be more evenly exhibited in the entirety thereof.

A content of the silicon-modified (meth)acrylic resin in the above-described resin composition is not particularly limited, but is preferably 5 parts by mass or more and 45 parts by mass or less, and more preferably 11 parts by mass or more and 28 parts by mass or less with respect to 100 parts by mass of the above-described resin composition. In a case where the content of the silicon-modified (meth)acrylic resin in the above-described resin composition is less than the above-described lower limit value, hardness of the coating layer 17 obtained by the above-described resin composition may be reduced. In addition, in a case where the content of the silicon-modified (meth)acrylic resin in the above-described resin composition exceeds the above-described upper limit value, a content of materials other than the silicon-modified (meth)acrylic resin in the above-described resin composition is relatively reduced, and thus flexibility of the coating layer 17 made of the above-described resin composition may be reduced.

Examples of the silicon-modified (meth)acrylic resin having the above-described configuration include compounds represented by Formula (5) and Formula (6).

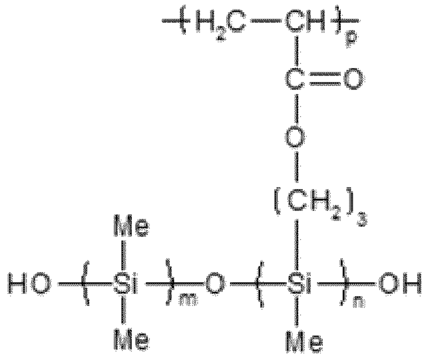

(5)

(in Formula (5), Me represents a methyl group, and m, n, and p each represent an integer of 1 or more)

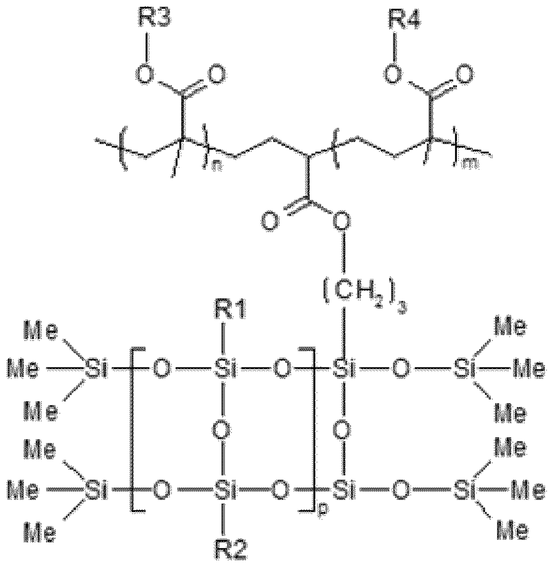

(6)

(in Formula (6), Me represents a methyl group, m, n, and p each represent an integer of 1 or more, and R1, R2, R3, and R4 each independently represent a hydrocarbon group, an organic group, or a hydrogen atom)

(Urethane (meth)acrylate)

In addition, it is preferable that the resin composition further contains a urethane (meth)acrylate.

When an unsaturated double bond is introduced into a terminal or a side chain of the repeating body in which the constitutional unit having a siloxane bond is repeated, in a case where the resin composition contains a urethane (meth)acrylate, a (meth)acryloyl group included in the urethane (meth)acrylate is bonded to the unsaturated double bond to form a network between the silicon-modified (meth)acrylic resin and the urethane (meth)acrylate. As a result, the resin composition is cured to obtain a cured product, thereby forming the coating layer 17 composed of the cured product. The curing of the resin composition by the bonding of the (meth)acryloyl group and the unsaturated double bond is carried out by photopolymerization in which the resin composition is cured by irradiation with energy ray such as ultraviolet rays.

In the coating layer 17 formed as described above, by containing the urethane (meth)acrylate, the flexibility of the coating layer 17 can be improved, and in a case where the optical sheet 15 is thermally bent in order to apply a part or all of the optical sheet 15 to a structure having a bent shape, the occurrence of cracks on the surface of the coating layer 17 can be accurately suppressed, so that thermal moldability can be imparted to the optical sheet 15.

Furthermore, by combining the above-described silicon-modified (meth)acrylic resin with the urethane (meth) acrylate, it is possible to obtain the optical sheet 15 in which excellent scratch resistance and excellent thermal moldability are highly compatible.

The urethane (meth)acrylate refers to a compound having a main chain having a urethane bond (-OCONH-) and a (meth)acryloyl group linked to the main chain. In addition, the urethane (meth)acrylate is a monomer or an oligomer.

The urethane (meth)acrylate having such a configuration is a compound having excellent flexibility because it has a urethane bond. Therefore, in a case where the coating layer 17 contains the urethane (meth)acrylate, flexibility

(softness) can be further imparted to the coating layer 17. Accordingly, in a case where the optical sheet 15 is molded into the bent optical sheet 10 having a bent shape, the occurrence of cracks in the bent portion can be accurately suppressed.

The urethane (meth)acrylate can be obtained, for example, as a reaction product between an isocyanate compound which is obtained by reacting polyol with diisocyanate, and a (meth)acrylate monomer having a hydroxyl group.

In addition, examples of the polyol include polyether polyol, polyester polyol, and polycarbonate diol.

In addition, the polyester polyol can be obtained, for example, by causing a polycondensation reaction of diol with dicarboxylic acid or dicarboxylic acid chloride or by causing an ester exchange reaction of esterifying diol or dicarboxylic acid. Examples of the dicarboxylic acid include adipic acid, succinic acid, glutaric acid, pimelic acid, sebacic acid, azelaic acid, maleic acid, terephthalic acid, isophthalic acid, and phthalic acid; and examples of the diol include ethylene glycol, 1,4-butanediol, 1,6-hexanediol, diethylene glycol, dipropylene glycol, triethylene glycol, tetraethylene glycol, tripropylene glycol, and tetrapropylene glycol.

Furthermore, examples of the polycarbonate diol include a reaction product of a diol and a carbonic acid ester, and as the diol, 1,4-butanediol, 1,6-hexanediol, ethylene glycol, propylene glycol, diethylene glycol, triethylene glycol, 1,2-propylene glycol, 1,3-propylene glycol, dipropylene glycol, 2-ethyl-1,3-hexanediol, 1,5-pentanediol, 3-methyl-1,5-pentanediol, 1,4-cyclohexanediol, polyoxyethylene glycol, or the like is used, in which one kind thereof or two or more kinds thereof can be used in combination.

In addition, examples of the (meth)acrylate monomer having a hydroxyl group include trimethylolpropane triacrylate, pentaerythritol triacrylate, dipentaerythritol triacrylate, 2-hydroxyethyl acrylate, 2-hydroxypropyl acrylate, 2-hydroxybutyl acrylate, 3-hydroxybutyl acrylate, and polyethylene glycol monoacrylate.

In addition, a content of the urethane (meth)acrylate in the above-described resin composition is not particularly limited, but is preferably 10 parts by mass or more and 75 parts by mass or less, and more preferably 17 parts by mass or more and 50 parts by mass or less with respect to 100 parts by mass of the above-described resin composition. In a case where the content of the urethane (meth)acrylate in the resin composition is less than the above-described lower limit value, the flexibility of the coating layer 17 may be reduced depending on the type of the urethane (meth)acrylate. In addition, in a case where the content of the urethane (meth)acrylate in the resin composition exceeds the above-described upper limit value, depending on the type of the urethane (meth)acrylate, a content of materials other than the urethane (meth)acrylate in the resin composition is relatively reduced, and thus the scratch resistance of the optical sheet 15 may be lowered.

((Meth)acrylate monomer)

In addition, it is preferable that the resin composition further contains a (meth)acrylate monomer.

When an unsaturated double bond is introduced into a terminal or a side chain of the repeating body in which the constitutional unit having a siloxane bond is repeated, in a case where the resin composition contains a (meth)acrylate monomer, a (meth)acryloyl group included in the (meth)acrylate monomer is bonded to the unsaturated double bond to form a network between the silicon-modified (meth)acrylic resin and the (meth)acrylate monomer, and as a result, the resin composition is cured to form the coating layer 17.

The (meth)acrylate monomer is not particularly limited, and examples thereof include pentaerythritol tetraacrylate, ditrimethylolpropane triacrylate, trimethylolpropane triacrylate, pentaerythritol triacrylate, dipentaerythritol triacrylate, ethoxylated trimethylolpropane triacrylate, ethoxylated pentaerythritol triacrylate, ethoxylated pentaerythritol tetraacrylate, polyethylene glycol diacrylate, ethoxylated bisphenol A diacrylate, ethoxylated hydrogenated bisphenol A diacrylate, ethoxylated cyclohexanedimethanol diacrylate, tricyclodecanedimethanol diacrylate, 2-hydroxyethyl acrylate, 2-hydroxypropyl acrylate, 2-hydroxybutyl acrylate, 3-hydroxybutyl acrylate, and isobornyl acrylate, in which one or two or more kinds thereof can be used in combination. Among these, from the viewpoint of improving the weather fastness of the optical sheet 15, a resin not including an aromatic group is preferable.

A content of the (meth)acrylate monomer in the above-described resin composition is not particularly limited, but is preferably 15 parts by mass or more and 55 parts by mass or less, and more preferably 27 parts by mass or more and 55 parts by mass or less with respect to 100 parts by mass of the above-described resin composition.

(Isocyanate)

In addition, it is preferable that the resin composition further contains an isocyanate.

As a result, in the resin composition, the isocyanate functions as a crosslinking agent which causes the silicon-modified (meth)acrylic resin to be bonded (crosslinked) between molecules. That is, in a case where the isocyanate as the crosslinking agent is contained, a hydroxyl group in the main chain of the silicon-modified (meth)acrylic resin, in which the constitutional unit derived from a (meth)acrylic monomer having a (meth)acryloyl group is repeated, is reacted with an isocyanate group in the isocyanate to form a crosslinking structure including a urethane bond, and as a result, the coating layer 17 composed of the cured product of the resin composition is formed. The curing of the resin composition by the

hydroxyl group and the isocyanate group being bonded to each other is carried out by thermosetting in which the resin composition is heated.

In the coating layer 17 formed as described above, since a network formed by the bonding of the hydroxyl group and the isocyanate group can be constructed, the scratch resistance and the weather fastness of the coating layer 17 can be further improved.

A content of the isocyanate in the resin composition is not particularly limited, but is preferably 3 parts by mass or more and 40 parts by mass or less and more preferably 10 parts by mass or more and 25 parts by mass or less with respect to 100 parts by mass of the above-described resin composition.

(Other materials)

The resin composition may further contain other materials in addition to the above-described various materials.

The other materials are not particularly limited, and examples thereof include a resin material other than the silicon-modified (meth)acrylic resin, a photopolymerization initiator, an ultraviolet absorber, a colorant, a sensitizer, a stabilizer, a surfactant, an antioxidant, an antireducing agent, an antistatic agent, a surface adjuster, a hydrophilic additive, a filling material, and a solvent, in which one or two or more kinds thereof can be used in combination.

An average thickness of the coating layer 17 composed of the cured product of the resin composition described above is not particularly limited, but is preferably 1 um or more and 40 um or less, more preferably 2 um or more and 30 um or less, and still more preferably 5 um or more and 20 um or less. In a case where the thickness of the coating layer 17 is less than the above-described lower limit value, the weather fastness of the optical sheet 15 may be deteriorated. On the other hand, in a case where the thickness of the coating layer 17 exceeds the above-described upper limit value, when the optical sheet 15 is molded into the bent optical sheet 10 having a bent shape, there is a risk that cracks may occur in the bent optical sheet 10 during the molding of the bent optical sheet 10.

Even with the optical sheet 15 according to the second embodiment, the same effects as those of the first embodiment can be obtained.

Hereinabove, the optical sheet and the optical component according to the embodiment of the present invention have been, but the present invention is not limited thereto. For example, each layer constituting the optical sheet 15 including the half mirror layer 13 as a reflective plate can be replaced with a layer having any configuration which can exhibit the same function.

In addition, in a case where it is necessary to impart excellent strength or the like by the optical sheet 15, another base material or the like may be laminated on the base materials 11 and 12 through an adhesive layer.

Furthermore, in the embodiment described above, a case in which the optical sheet 15 according to the embodiment of the present invention is applied to the lens 30 provided with the bent optical sheet 10 having a bent shape as the bent resin substrate has been described, that is, a case in which the optical component according to the embodiment of the present invention is configured with the lens 30 has been described; but the optical sheet 15 can also be used by being attached to, for example, a cover film provided in a display device such as a liquid crystal display and a head-up display, a mobile unit such as a bicycle, a car, an airplane, and a railway, a window member provided in a machine tool, a building, a brightness enhancement film or a cold mirror provided in a light source of a head-up display, a cover member provided in a fog lamp, a reflective plate provided in an on-vehicle sensor such as an infrared sensor, and the like. In these cases, the optical component is configured of the cover film, the window member, the cover member, the brightness enhancement film, the cold mirror, or the reflective plate, with the bent optical sheet 10 attached to these members.

[Examples]

Hereinafter, the present invention will be described in detail based on examples. The present invention is not limited to these examples.

1. Preparation of raw materials

<Polycarbonate (PC1)>

Iupilon E2000 (manufactured by Mitsubishi Engineering-Plastics Corporatio) was prepared as a polycarbonate (PC1).

<Methyl polymethacrylate (heat-resistant PMMA 1)>

DELPET PM120N (manufactured by Asahi Kasei Corporation) was prepared as a methyl polymethacrylate (heat-resistant PMMA 1).

<Polyethylene terephthalate (heat-resistant PETG1)>

Tritan TX2001 (manufactured by Eastman Chemical Company; glycol-modified polyethylene terephthalate) was prepared as a heat-resistant amorphous polyethylene terephthalate (heat-resistant PETG1).

<Polyethylene terephthalate (PETG2)>

SKYGREEN K2012 (manufactured by SK Inc.) was prepared as an amorphous polyethylene terephthalate copolymer (PETG2).

<Polyarylate (PAR1)>

U-Polymer P-5001 (manufactured by Unitika Ltd.) was prepared as a polyarylate (PAR1).

<Polyethersulfone (PES)>

SUMIKAEXCEL 3600G (manufactured by Sumitomo Chemical Company) was prepared as a polyethersulfone (PES).

<Polyethylene naphthalate (PEN1)>

Teonex TN8065S (manufactured by TEIJIN LIMITED) was prepared as a polyethylene naphthalate (PEN1).

<Polyethylene terephthalate (APET1)>

NOVAREX GM700Z (manufactured by Mitsubishi Chemical Corporation; crystalline polyethylene terephthalate) was prepared as a polyethylene terephthalate (APET1).

<Acrylonitrile-styrene copolymer (AS1)>

DENKA AS-XGS (manufactured by Denka Company Limited) was prepared as an acrylonitrile-styrene copolymer (AS1).

<Styrene-N-phenylmaleimide-maleic acid copolymer (IP1)>

DENKA IP-ND (manufactured by Denka Company Limited) was prepared as a styrene-N-phenylmaleimide-maleic acid copolymer (IP1).

2. Production of optical sheet

(Example 1)

[1] First, the polycarbonate (PC1) as a resin material for forming the base materials 11 and 12 and the high-refractive-index layer 31, and the methyl polymethacrylate (heat-resistant PMMA1) as a resin material for forming the low-refractive-index layer 32 were prepared.

[2] Next, the polycarbonate (PC1, Tg: 150°C) and the methyl polymethacrylate (heat-resistant PMMA1, Tg: 123°C) were each melted at 270°C using an extruder ("SNT40-28" manufactured by SANE Co., Ltd.), and co-extruded using a feed block and a die to form films; thereafter, the films were cooled to obtain an optical sheet 15 of Example 1 that the upper surface and the lower surface of the half mirror layer 13 composed of a total of 1,023 layers (number of repetitions: 511 times) of a laminate (multilayer laminate) in which the high-refractive-index layer 31 and the low-refractive-index layer 32 were alternately laminated were coated with the first base material 11 and the second base material 12, respectively; here, the amount of extrusion was adjusted such that a laminated thickness ratio of the high-refractive-index layer 31 and the low-refractive-index layer 32 was 1:1.

In the obtained half mirror layer 13, in a case where a refractive index of the low-refractive-index layer 32 at a wavelength of 589 nm was measured with an Abbe refractometer (manufactured by ATAGO CO., LTD., "NA-1T SOLID"), it

was 1.510. In addition, in a case where a refractive index of the high-refractive-index layer 31 at a wavelength of 589 nm was measured with an Abbe refractometer (manufactured by ATAGO CO., LTD., "NA-1T SOLID"), it was 1.585. Furthermore, an average thickness of the half mirror layer 13 was 100 um, and average thicknesses of the first base material 11 and the second base material 12 were 0.3 mm.

(Examples 2 to 5 and Reference Examples 1 to 3)

Optical sheets 15 of Examples 2 to 5 and Reference Examples 1 to 3 were obtained in the same manner as in Example 1, except that, in the above-described step [1], as the resin material for forming the first base material 11, the second base material 12, the high-refractive-index layer 31, and the low-refractive-index layer 32, materials shown in Table 1 were prepared, and the half mirror layer 13 obtained in the above-described step [3] was subjected to a MD stretching treatment as necessary.

3. Evaluation

The optical sheets 15 of each of Examples and Reference Examples were evaluated by the following methods.

<1A> Measurement of reflectivity R1 (%) of bent optical sheet 10 before heating

First, the optical sheet 15 (laminate) of each of Examples and Reference Examples was pressed against a metal mold to be formed into the bent optical sheet 10 (bent laminate) having a bent shape with a curvature radius of 60 mm at a temperature higher than a higher glass transition point between the glass transition point Tg1 of the main material constituting the high-refractive-index layer 31 and the glass transition point Tg2 of the main material constituting the low-refractive-index layer 32 by 10°C.

Next, the bent optical sheet 10 was disposed between a light source emitting light having a wavelength of 589 nm and a light receiving unit such that an angle between an upper surface of the bent optical sheet and a straight line connecting the light source and the light receiving unit was 90°.

Next, the light receiving unit received the emitted light (transmitted light) emitted from the light source and transmitted through the bent optical sheet 10, and an initial reflectivity R1 (%) (before the heating) was obtained by measuring a transmittance (%) of the transmitted light.

<2A> Measurement of reflectivity R2 (%) of bent optical sheet 10 after heating

First, the optical sheet 15 (laminate) of each of Examples and Reference Examples was pressed against a metal mold to be formed into the bent optical sheet 10 (bent laminate) having a bent shape with a curvature radius of 60 mm at a temperature higher than a higher glass transition point between the glass transition point Tg1 of the main material constituting the high-refractive-index layer 31 and the glass transition point Tg2 of the main material constituting the low-refractive-index layer 32 by 10°C.

Next, the bent optical sheet 10 was stored in a heat circulation oven in a temperature environment of 105°C for 1,000 hr, and then disposed between a light source emitting light having a wavelength of 589 nm and a light receiving unit such that an angle between an upper surface of the bent optical sheet and a straight line connecting the light source and the light receiving unit was 90°.

Next, the light receiving unit received the emitted light (transmitted light) emitted from the light source and transmitted through the bent optical sheet 10, and a reflectivity R2 (%) after the heating was obtained by measuring a transmittance (%) of the transmitted light.

Using the reflectivity R2 (%) after the heating obtained here and the initial reflectivity R1 (%) (before heating) obtained in <1A> above, reflectivity retention (R2/R1 × 100 [%]) was obtained.

<3A> Confirmation of heat resistance of optical sheet in visible light region

First, a reflectivity of the optical sheet 15 of each of Examples and Reference Examples at a wavelength of 590 nm was measured. Thereafter, a durability test (105°C × 1,000 hr) was performed, and the reflectivity was also measured for the sample (optical sheet) after the test.

In a case where the reflectivity before and after the durability test was denoted as R3 and R4 respectively, a rate of change in reflectivity was obtained based on these values as shown below.

Rate of change in reflectivity: R4/R3 × 100 (%)

Thereafter, the obtained rate of change in reflectivity was evaluated based on the evaluation standard shown below.

[Evaluation standard]

A: R4/R3 × 100 was 85% or more.
B: R4/R3 × 100 was 80% or more and less than 85%.
C: R4/R3 × 100 was less than 80%.

<5A> Confirmation of thermal bending properties of optical sheet

First, the optical sheet 15 of each of Examples and Reference Examples was subjected to a thermal bending processing by being pressed against a metal mold having a curvature radius of 60 mm in a state of being heated to a temperature higher than a higher glass transition point between the glass transition point Tg1 and the glass transition point Tg2 by 10°C.
The bent optical sheet 10 subjected to the thermal bending was stored in a heat circulation oven in a temperature environment of 105°C for 1,000 hr, and a curvature radius thereof was measured was evaluated based on the evaluation standard shown below.

[Evaluation standard]

With regard to the number of bent optical sheets which maintained a curvature radius of 60 ± 5 mm after the storing in the heat circulation oven in a temperature environment of 105°C for 1,000 hr,

A: 50 sheets out of 50 bent optical sheets;
B: 48 or more and less than 50 sheets out of 50 bent optical sheets;
C: less than 48 sheets out of 50 bent optical sheets.

In addition, after being stored in the heat circulation oven in a temperature environment of 105°C for 1,000 hr, the presence or absence of peeling between the base materials 11 and 12 and the half mirror layer 13 in the bent optical sheet 10 was visually observed, and the presence or absence of peeling was evaluated based on the evaluation standard shown below.

[Evaluation standard]

With regard to the number of bent optical sheets in which the peeling between the base materials 11 and 12 and the half mirror layer 13 was observed after the storing in the heat circulation oven in a temperature environment of 105°C for 1,000 hr,

A: 0 sheets out of 50 bent optical sheets;
B: 1 or more and less than 3 sheets out of 50 bent optical sheets;
C: 3 or more sheets out of 50 bent optical sheets.

The evaluation results of the optical sheet 15 of each of Examples and Reference Examples obtained as described above are shown in Table 1.

[Table 1]

| | | | Example 1 | Example 2 | Example 3 | Example 4 | Example 5 | Reference Example 1 | Reference Example 2 | Reference Example 3 |
|---|---|---|---|---|---|---|---|---|---|---|
| Base material | First base material 11 | Resin material | PC1 | PARI | Heat-resistant PETG1 | PES1 | PEN1 | PEN1 | PC1 | APET1 |
| | Second base material 12 | Resin material | PC1 | PARI | Heat-resistant PETG1 | PES1 | PEN1 | PEN1 | PC1 | APET1 |
| Half mirror layer | High-refractive-index layer | Resin material | PC1 | PARI | Heat-resistant PETG1 | PES1 | PEN1 | PEN1 | PC1 | APET1 |
| | | Refractive index N1 (589 nm) | 1.585 | 1.595 | 1.570 | 1.650 | 1.632 | 1.632 | 1.585 | 1.580 |
| | | Tg1 (°C) | 150 | 175 | 120 | 225 | 120 | 120 | 150 | 75 |
| | Low-refractive-index layer | Resin material | Heat-resistant PMMA1 | Heat-resistant PMMA1 | Heat-resistant PMMA1 | PAR1 | Heat-resistant PMMA1 | PETG2 | APET1 | Heat-resistant PMMA1 |
| | | Refractive index N2 (589 nm) | 1.510 | 1.510 | 1.510 | 1.595 | 1.510 | 1.565 | 1.580 | 1.510 |
| | | Tg2 (°C) | 123 | 123 | 123 | 175 | 123 | 70 | 75 | 123 |
| | Optical characteristics | Rth | 250 | 400 | 160 | 490 | 700 | 2500 | 250 | 550 |

(continued)

| | | Example 1 | Example 2 | Example 3 | Example 4 | Example 5 | Reference Example 1 | Reference Example 2 | Reference Example 3 |
|---|---|---|---|---|---|---|---|---|---|
| Evaluation | N1 - N2 | 0.075 | 0.085 | 0.060 | 0.055 | 0.122 | 0.067 | 0.005 | 0.070 |
| | \|Tg1 - Tg2\| | 27 | 52 | 3 | 50 | 3 | 50 | 75 | 48 |
| | Number of repetitions of nigh-refractive-index layer and low-refractive-index laver | 511 | 511 | 511 | 511 | 511 | 511 | 511 | 511 |
| | Initial reflectivity R1 (%) | 49 | 54 | 44 | 42 | 68 | 47 | 10 | 48 |
| | Reflectivity retention R2/R1 (%) | 90 | 90 | 85 | 95 | 85 | 10 | 10 | 10 |
| | Heat resistance visible light region (wavelength: 590 nm) | A | A | A | A | A | C | C | C |
| | Thermal bending evaluation (thermal bending processability) | A | B | A | B | C | C | A | C |
| | Thermal bending evaluation (interlayer peeling property) | A | A | A | A | A | A | A | A |

As shown in Table 1, in the optical sheet of each of Example, each continuous layer was formed at the interface between the first base material 11 and the half mirror layer 13 and at the interface between the second base material 12 and the half mirror layer 13, and thus the occurrence of peeling at each interface during the thermal bending processing was prevented favorably, and an optical sheet having excellent processability was obtained.

Industrial Applicability

According to the present invention, in the half mirror layer including a repeating portion which consists of the laminate including the high-refractive-index layer and the low-refractive-index layer alternately laminated, and the first base material and the second base material provided on the half mirror layer by bonding, a continuous layer of the first base material and the half mirror layer is formed at an interface between the first base material and the half mirror layer, and a continuous layer of the second base material and the half mirror layer is formed at an interface between the second base material and the half mirror layer. Therefore, even in a case where the optical sheet is subjected to a thermal bending processing to obtain a bent optical sheet in which one surface of the optical sheet is a bent concave surface and the other surface is a bent convex surface, it is possible to accurately suppress or prevent peeling between the first base material and the half mirror layer and peeling between the second base material and the half mirror layer at the interface between the first base material and the half mirror layer and the interface between the second base material and the half mirror layer, and it is possible to obtain an optical sheet having excellent processability. Accordingly, the present invention has industrial applicability.

Reference Signs List

10: bent optical sheet
11: first base material
12: second base material
13: half mirror layer
15: optical sheet
17: coating layer
20: frame
21: rim portion
22: bridge portion
23: temple portion
24: nose pad portion
30: lens
31: high-refractive-index layer
32: low-refractive-index layer
33: repeating portion
35: resin layer
40: mold
50: protective film
100: sunglasses
150: multilayer laminate
200: bent multilayer laminate

**Claims**

**1.** An optical sheet comprising:

a first base material which is made of a resin material having light transmittance as a main material;
a half mirror layer which is provided on one surface of the first base material by bonding and consists of a laminate in which a high-refractive-index layer and a low-refractive-index layer are alternately laminated in a repeated manner; and
a second base material which is made of the resin material as a main material and is provided on a surface of the half mirror layer opposite to the first base material by bonding,
wherein, in the half mirror layer, a refractive index of the high-refractive-index layer is higher than a refractive index of the low-refractive-index layer, and

wherein a continuous layer of the first base material and the half mirror layer is formed at an interface between the first base material and the half mirror layer, and a continuous layer of the second base material and the half mirror layer is formed at an interface between the second base material and the half mirror layer.

**2.** The optical sheet according to Claim 1,
wherein, in a case where a glass transition point of a main material constituting the high-refractive-index layer is denoted as Tg1 and a glass transition point of a main material constituting the low-refractive-index layer is denoted as Tg2, Tg1 and Tg2 are 105°C or higher.

**3.** The optical sheet according to Claim 2,
wherein the glass transition point Tg1 and the glass transition point Tg2 satisfy a relationship of $0°C \leq |Tg1 - Tg2| \leq 60°C$.

**4.** The optical sheet according to Claim 2 or 3,
wherein a lower glass transition point of the glass transition point Tg1 and the glass transition point Tg2 is 110°C or higher and 250°C or lower.

**5.** The optical sheet according to any one of Claims 1 to 3,
wherein, in a case where a refractive index of the high-refractive-index layer at a wavelength of 589 nm is denoted as N1 and a refractive index of the low-refractive-index layer at the wavelength of 589 nm is denoted as N2, a difference in refractive index (N1 - N2) is 0.05 or more and 0.25 or less.

**6.** The optical sheet according to any one of Claims 1 to 3,
wherein an average thickness of each of the high-refractive-index layer and the low-refractive-index layer is 50 nm or more and 300 nm or less.

**7.** The optical sheet according to any one of Claims 1 to 3,
wherein, in the half mirror layer, a number of repetitions of alternately laminating the high-refractive-index layer and the low-refractive-index layer is 50 or more and 750 or less.

**8.** The optical sheet according to any one of Claims 1 to 3,
wherein a thickness direction retardation (Rth) of the half mirror layer at a wavelength of 589 nm is 500 nm or less.

**9.** The optical sheet according to any one of Claims 1 to 3,
wherein, when the optical sheet is formed into a bent optical sheet having a bent shape with a curvature radius of 60 mm at a temperature higher than a higher glass transition point of a glass transition point Tg1 of a main material constituting the high-refractive-index layer and a glass transition point Tg2 of a main material constituting the low-refractive-index layer by 10°C, in a case where a reflectivity of the bent optical sheet with respect to light having a wavelength of 589 nm is denoted as R1 [%] and a reflectivity of the bent optical sheet which has been stored in a heat circulation oven in a temperature environment of 105°C for 1,000 hr with respect to the light having a wavelength of 589 nm is denoted as R2 [%], reflectivity retention obtained by $R2/R1 \times 100$ [%] is 80% or more.

**10.** The optical sheet according to any one of Claims 1 to 3,
wherein, when the optical sheet is formed into a bent optical sheet having a bent shape with a curvature radius of 60 mm at a temperature higher than a higher glass transition point of a glass transition point Tg1 of a main material constituting the high-refractive-index layer and a glass transition point Tg2 of a main material constituting the low-refractive-index layer by 10°C, and then the bent optical sheet is stored in a heat circulation oven in a temperature environment of 105°C for 1,000 hr, among 50 bent optical sheets, a number of bent optical sheets in which peeling occurs between the first base material and the half mirror layer or between the second base material and the half mirror layer is 2 or less.

**11.** An optical component comprising:
the optical sheet according to any one of Claims 1 to 3.

FIG. 1

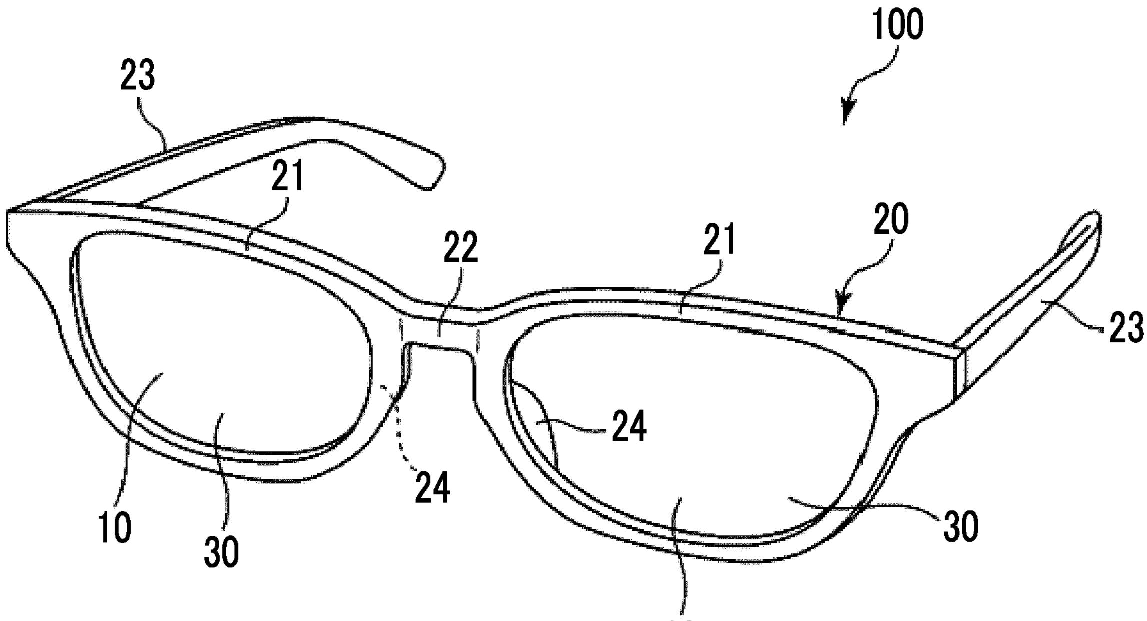

FIG. 2A

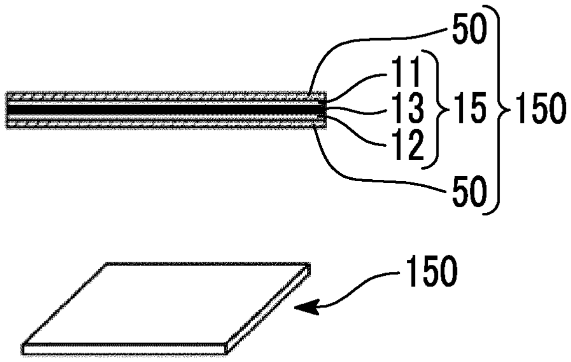


FIG. 2B

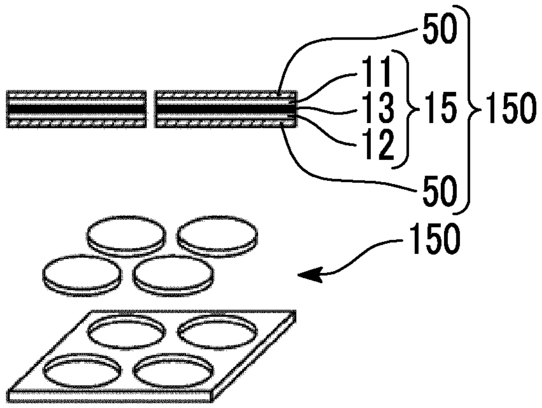


FIG. 2C

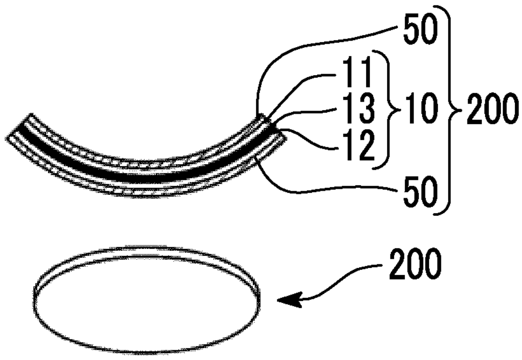


FIG. 2D

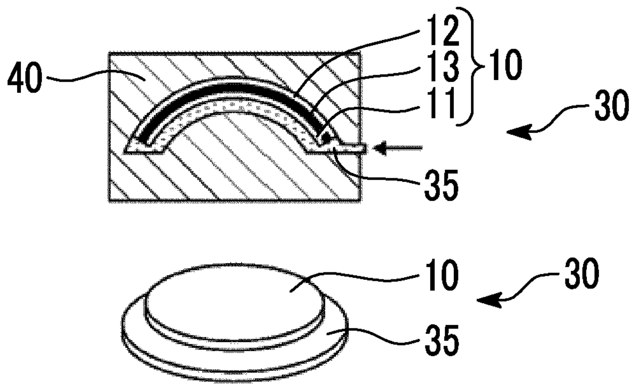

FIG. 3

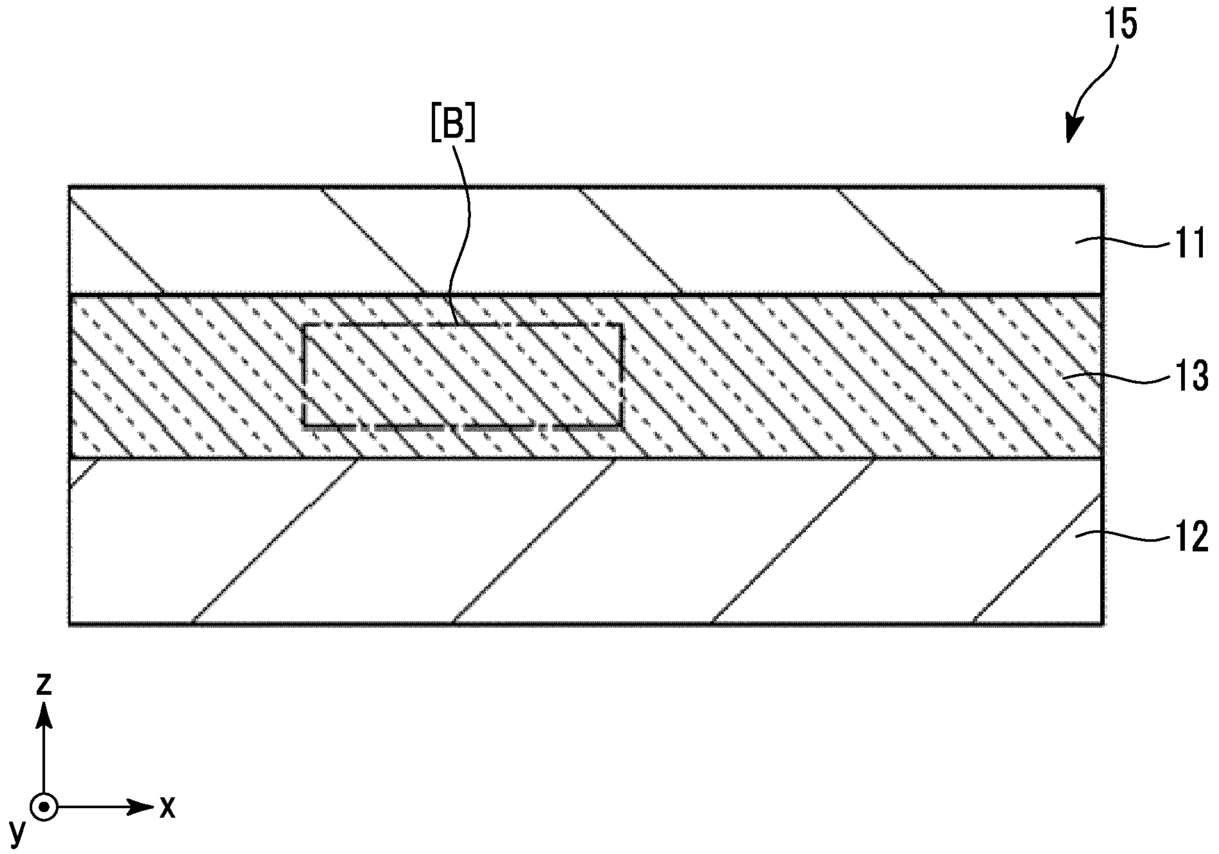


FIG. 4

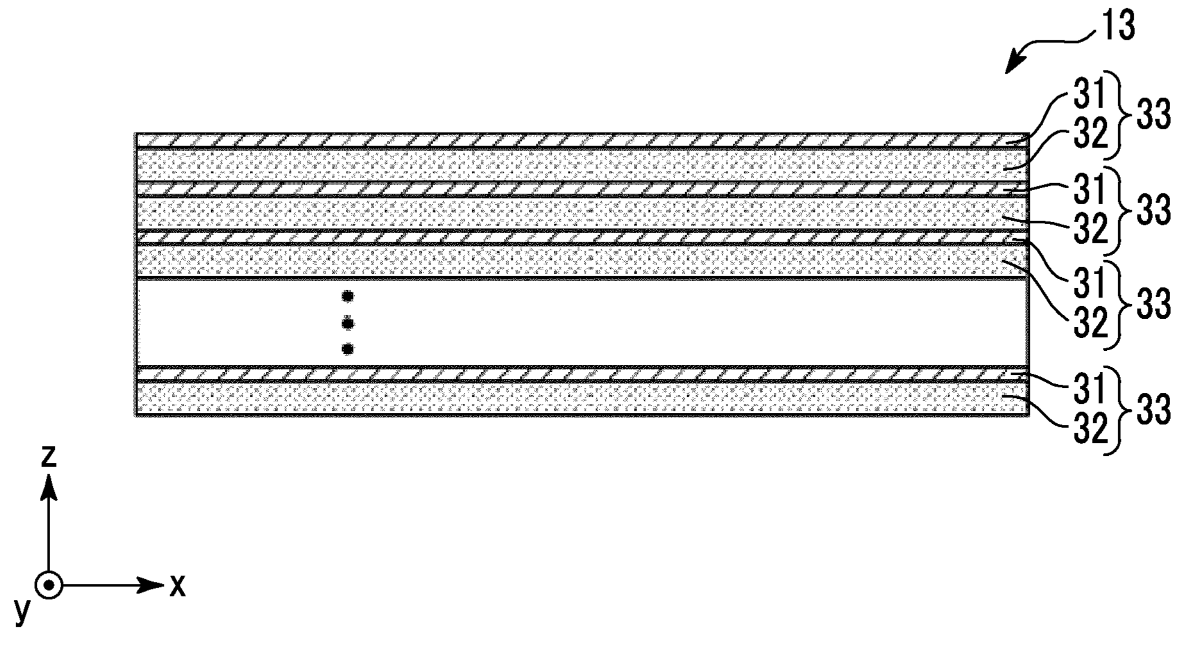

FIG. 5

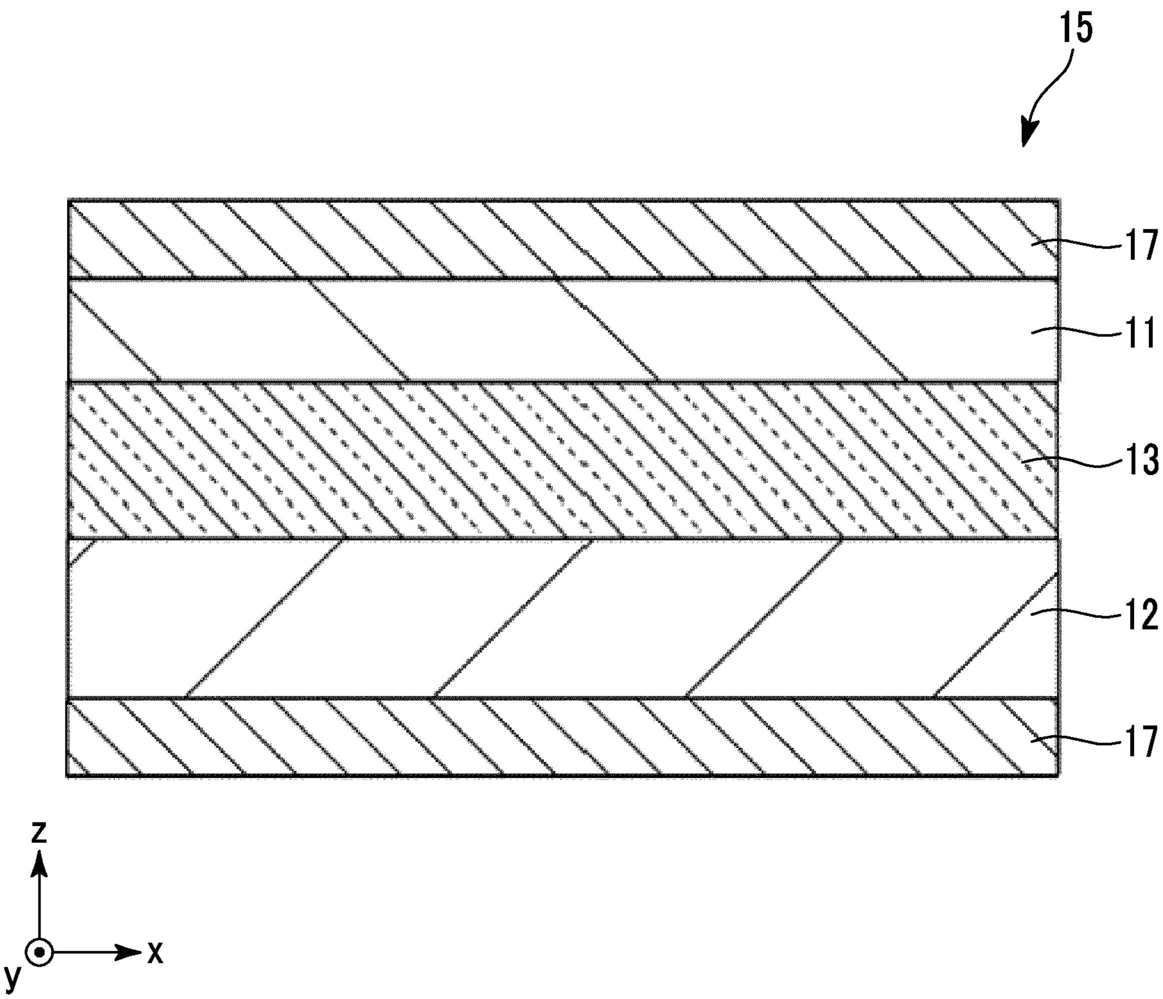

**INTERNATIONAL SEARCH REPORT**

International application No. **PCT/JP2023/013006**

**A. CLASSIFICATION OF SUBJECT MATTER**

***G02B 5/26***(2006.01)i; ***G02B 1/04***(2006.01)i; ***G02B 5/28***(2006.01)i; ***G02B 5/30***(2006.01)i; ***G02C 7/10***(2006.01)i
FI: G02B5/26; G02B1/04; G02B5/28; G02B5/30; G02C7/10

According to International Patent Classification (IPC) or to both national classification and IPC

**B. FIELDS SEARCHED**

Minimum documentation searched (classification system followed by classification symbols)

G02B5/26; G02B1/04; G02B5/28; G02B5/30; G02C7/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/086067 A1 (NIPPON KAYAKU KABUSHIKI KAISHA) 26 May 2017 (2017-05-26) paragraphs [0017], [0038]-[0040], etc. | 1-11 |
| Y | JP 2013-101330 A (DAINIPPON PRINTING CO LTD) 23 May 2013 (2013-05-23) paragraph [0016], etc. | 1-11 |
| Y | JP 2021-45924 A (TOYOBO FILM SOLUTIONS LTD) 25 March 2021 (2021-03-25) paragraphs [0046], [0056], etc. | 2-4, 9-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2023** | **13 June 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | Telephone No. |

Form PCT/ISA/210 (second sheet) (January 2015)

**INTERNATIONAL SEARCH REPORT**
**Information on patent family members**

International application No.
**PCT/JP2023/013006**

| Patent document cited in search report | Publication date (day/month/year) | Patent family member(s) | Publication date (day/month/year) |
|---|---|---|---|
| WO 2017/086067 A1 | 26 May 2017 | US 2018/0267219 A1<br>paragraphs [0029], [0052]-[0054], etc.<br>EP 3379326 A1<br>CN 108351538 A<br>TW 201728921 A | |
| JP 2013-101330 A | 23 May 2013 | KR 10-2013-0041741 A<br>paragraph [0016], etc.<br>TW 201323916 A | |
| JP 2021-45924 A | 25 March 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009294445 A